# EUROPEAN PATENT APPLICATION

(11) **EP 4 730 843 A1**
(43) Date of publication of application: **22.04.2026**
(21) Application number: 25208559.2
(22) Date of filing: 14.10.2025
(51) Int. Cl.: H04R 25/00, H01Q 1/27, H04B 1/04, H04B 1/18

(54) **ANTENNA SYSTEM FOR HEARING INSTRUMENTS**

(30) Priority: 15.10.2024 US 202463707629 P
(71) Applicant: Starkey Laboratories, Inc., Eden Prairie, MN 55344 (US)
(72) Inventor: Chang, Arkajyoti, Eden Prairie, MN 55344 (US); Haubrich, Gregory John, Eden Prairie, MN 55344 (US)
(74) Representative: Vossius & Partner Patentanwälte Rechtsanwälte mbB

(57) **Abstract**

A hearing instrument comprises: a communication system that includes one or more components, wherein the one or more components include an antenna, impedance matching circuitry, and a transceiver electrically connected to the antenna via the impedance matching circuitry; and one or more processors configured to: obtain communication performance data for a device-configuration combination, wherein, for each respective system configuration of a plurality of system configurations, the communication performance data for the device-configuration combination is indicative of values of one or more Quality of Service (QoS) parameters of Radio Frequency (RF) communication between the hearing instrument and a counterpart device while the communication system uses the respective system configuration; select, based on the communication performance data, a system configuration; and configure the communication system to use the selected system configuration.

## Description

This patent application claims the benefit of U.S. Provisional Patent Application 63/707,629, filed October 15, 2024, the entire content of which is incorporated by reference.

### TECHNICAL FIELD

This disclosure relates to antennas for hearing instruments.

### BACKGROUND

Wearable devices are devices designed to be worn on, in, or near one or more of a user's body. Example types of wearable device may include hearing instruments, smart watches, on-body biometric sensors, media players, augmented or virtual reality headwear, and so on. Hearing instruments are wearable devices designed to be worn on, in, or near one or more of a user's ears. Common types of hearing instruments include hearing assistance devices (e.g., "hearing aids"), earbuds, headphones, hearables, cochlear implants, and so on. In some examples, a hearing instrument may be implanted or integrated into a user. Some hearing instruments include additional features beyond sound-amplification. For example, some modern hearing instruments include advanced audio processing for improved device functionality, controlling and programming the devices, and beamforming, and some can even communicate wirelessly with external devices including other hearing instruments (e.g., for streaming media).

### SUMMARY

This disclosure describes hearing instruments with antennas having configurable feed-point impedances. A user may wear a first hearing instrument in their left ear and a second hearing instrument in their right ear. The two hearing instruments may use Radio Frequency (RF) signals to communicate with each other. Communication between the two hearing instruments worn by a user may be referred to as Ear-To-Ear (E2E) communication. Maintaining adequate E2E communication performance can be challenging, especially for small custom hearing instruments such as completely-in-canal (CIC), in-the-canal (ITC), and in-the-ear (ITE) hearing instruments. Problems arise in E2E communication because of differences in user head shapes, RF interference, and other causes. Increasing power output is a conventional way to compensate for poor E2E communication. However, increasing power increases peak current drains from the batteries of the hearing instruments, which causes premature battery depletion or the risk of early supply brown-out conditions. Other alternatives for increasing E2E communication performance include increasing the size or length of the antennas of the hearing instruments. However, increasing the size or length of the antennas may be less aesthetically desirable and/or may not fit users as well.

The techniques of this disclosure may improve E2E communication performance and communication with other counterpart devices, which may avoid the need to increase power output, may avoid the need to increase the size or length of antennas, and/or may increase the range of head shapes with which the hearing instruments are compatible. As described herein, altering an impedance match of an antenna and impedance matching circuitry of a hearing instrument may alter the strength of the electric field in the near-field domain of the antenna when the hearing instrument is located in a vicinity of a surface of a user's head. As further described herein, altering the impedance match of the antenna and the impedance matching circuitry does not significantly alter the performance in the antenna's far-field domain.

In accordance with one or more techniques of this disclosure, a hearing instrument worn by a user includes an antenna, impedance matching circuitry, and one or more processors. A system configuration of a communication system that includes the antenna may be selected on a per-channel basis to optimize values of one or more Quality of Service (QoS) parameters of wireless communication between the hearing instrument and one or more counterpart devices, such as a contralateral hearing instrument worn by the user, an on-body device, or an off-body device. The impedance matching of the antennas and impedance matching circuitry of hearing instruments worn by different users may be different. Moreover, in some examples, impedance matching of the antennas and impedance matching circuitry of a hearing instrument may be different for communicating with different devices and different radio frequency (RF) environments.

In one example, this disclosure describes a hearing instrument comprising: a communication system that includes one or more components, wherein the one or more components include an antenna, impedance matching circuitry, and a transceiver electrically connected to the antenna via the impedance matching circuitry; and one or more processors implemented circuitry and communicatively coupled to the transceiver, the one or more processors configured to: obtain communication performance data for a plurality of device-configuration combinations, wherein: each of the device-configuration combinations includes a combination of a counterpart device and a system configuration of a plurality of system configurations, the system configurations are associated with different levels of impedance matching between the antenna and the impedance matching circuitry, for each respective device-configuration combination of the device-configuration combinations, the communication performance data for the respective device-configuration combination is indicative of values of one or more Quality of Service (QoS) parameters of Radio Frequency (RF) communication between the hearing instrument and the counterpart device of the respective device-configuration combination while the communication system uses the system configuration of the device-configuration combination to communicate with the counterpart device of the respective device-configuration combination; select, based on the communication performance data for the plurality of system configurations, a system configuration from among the plurality of system configurations for wireless communication with the counterpart device; and configure the communication system to use the selected system configuration for wireless communication with the counterpart device.

**In** another example, this disclosure describes a method comprising: obtaining, by one or more processors of a hearing instrument that are communicatively coupled to a transceiver of a communication system of the hearing instrument, communication performance data for a plurality of device-configuration combinations, wherein: each of the device-configuration combinations includes a combination of a counterpart device and a system configuration of a plurality of system configurations, the system configurations are associated with different levels of impedance matching between an antenna of the communication system and impedance matching circuitry of the communication system, for each respective device-configuration combination of the device-configuration combinations, the communication performance data for the respective device-configuration combination is indicative of values of one or more Quality of Service (QoS) parameters of Radio Frequency (RF) communication between the hearing instrument and the counterpart device of the respective device-configuration combination while the communication system uses the system configuration of the device-configuration combination to communicate with the counterpart device of the respective device-configuration combination; selecting, by the one or more processors, based on the communication performance data for the plurality of system configurations, a system configuration from among the plurality of system configurations for wireless communication with the counterpart device; and configuring, by the one or more processors, the communication system to use the selected system configuration for wireless communication with the counterpart device.

In another example, this disclosure describes a hearing instrument comprising: a communication system that includes an antenna, an impedance matching circuitry, and a transceiver electrically connected to the antenna via the impedance matching circuitry; and one or more processors implemented circuitry and communicatively coupled to the transceiver, the one or more processors configured to: obtain environment data characterizing environmental conditions of a Radio Frequency (RF) communication channel between the hearing instrument and a counterpart device; apply one or more machine learning (ML) classification models to the environment data to generate an RF environment classification for the RF communication channel; select, based on the RF environment classification, a system configuration from among a plurality of system configurations that the communication system is configured to use, wherein the system configurations are associated with different levels of impedance matching between the antenna and the impedance matching circuitry; and cause the communication system to use the selected system configuration while transmitting and receiving Radio Frequency (RF) signals to and from a counterpart device.

In another example, this disclosure describes a method comprising: obtaining, by one or more processors of a hearing instrument, environment data characterizing environmental conditions of a Radio Frequency (RF) communication channel between the hearing instrument and a counterpart device; applying, by the one or more processors, one or more machine learning (ML) classification models to the environment data to generate an RF environment classification for the RF communication channel; selecting, by the one or more processors, based on the RF environment classification, a system configuration from among a plurality of system configurations that a communication system of the hearing instrument is configured to use, wherein the system configurations are associated with different levels of impedance matching between an antenna of the communication system of the hearing instrument and impedance matching circuitry of the communication system; and causing, by the one or more processors, the communication system to use the selected system configuration while transmitting and receiving Radio Frequency (RF) signals to and from a counterpart device

The details of one or more aspects of the disclosure are set forth in the accompanying drawings and the description below. Other features, objects, and advantages of the features and techniques described in this disclosure will be apparent from the description, drawings, and claims.

### BRIEF DESCRIPTION OF DRAWINGS

FIG. 1 is a conceptual diagram illustrating an example system that includes one or more hearing instruments, in accordance with one or more aspects this disclosure.
FIG. 2 is a block diagram illustrating example components of a hearing instrument, in accordance with one or more aspects of this disclosure.
FIG. 3 is a conceptual diagram illustrating a first example antenna, in accordance with one or more aspects of this disclosure.
FIG. 4 is a conceptual diagram illustrating a second example antenna, in accordance with one or more aspects of this disclosure.
FIG. 5 is a conceptual diagram illustrating a third example antenna, in accordance with one or more aspects of this disclosure.
FIG. 6A is a conceptual diagram illustrating an example antenna, in accordance with one or more aspects of this disclosure.
FIG. 6B is a conceptual diagram illustrating an example matching network without a capacitor, in accordance with one or more techniques of this disclosure.
FIG. 6C is a conceptual diagram illustrating an example matching network, in accordance with one or more techniques of this disclosure.
FIG. 7A, 7B, and 7C are conceptual diagrams illustrating an example impedance matching network, in accordance with one or more aspects of this disclosure.
FIG. 8 is a flowchart illustrating an example operation for selecting a hearing instrument, in accordance with one or more aspects of this disclosure.
FIG. 9 is a flowchart illustrating an example operation of a hearing instrument, in accordance with one or more aspects of this disclosure.
FIG. 10 is a flowchart illustrating an example operation of a hearing instrument for selecting a system configuration for a communication link, in accordance with one or more techniques of this disclosure.
FIG. 11 is a flowchart illustrating an example operation of a hearing instrument to select a system configuration based on an RF environment classification, in accordance with one or more aspects of this disclosure.
FIG. 12 is a flowchart illustrating an example operation for selecting a system configuration, in accordance with one or more aspects of this disclosure.

### DETAILED DESCRIPTION

Wireless communication links are becoming an increasingly important aspect of wearable devices, such as hearing instruments. Although much of this disclosure describes hearing instruments, the communication systems of this disclosure may be used in other types of wearable devices that include wireless capabilities. A hearing instrument may use wireless communication links to communicate with one or more counterpart devices, such as one or more other hearing instruments, mobile phones, hearing instrument accessories, or other types of devices. Such communication may serve a wide variety of purposes, such as streaming media data and sending sensor data.

A hearing instrument may include a communication system to perform wireless communication. The communication system may include an antenna, impedance matching circuitry, and a transceiver. In part because of the small sizes of hearing instruments and the limited storage capacities of the batteries of hearing instruments, designing antennas for hearing instruments is challenging. For example, it may be challenging to design an antenna for a hearing instrument that has high performance for two or more of ear-to-ear communication, on-body communication, and off-body communication. Moreover, it may be impractical because of the size and cosmetic constraints of a hearing instrument for the hearing instrument to include multiple antennas for wireless communication with different types of devices. In this disclosure, ear-to-ear communication is wireless communication between hearing instruments worn in different ears of a user. On-body communication may include wireless communication with devices that are on the body of a user of the hearing instrument, such as smartphones, smartwatches, wearable devices, on-body sensor devices, and so on. Off-body communication may include wireless communication with devices other than hearing instruments that are not on the user's body, such as accessory devices, Internet of Things (IoT) devices, wireless base stations, and so on.

Ear-to-ear (E2E) communication may be especially challenging for hearing instruments. A user's head attenuates RF signals that pass directly through the user's head. However, because the back of the user's head is curved and because the two hearing instruments are within the near-field domains of the RF signals, RF signals propagate in a creeping wave along the back of the user's head, thereby allowing more efficient E2E communication. It has been observed that E2E communication may be enhanced when impedance matching of an antenna and impedance matching circuitry of a communication system of a hearing instrument is altered to increase the electric field in the near-field vicinity of the surface of the user's head. While the E2E antenna performance is significantly improved, the far-field performance of the antenna does not necessarily improve but is not significantly altered. Since different users have different head shapes, E2E antenna performance differs among users, even when using communication systems having the same system configurations. Thus, different levels of impedance matching may be desirable to optimize E2E antenna performance for different users. At the same time, it is important to maintain the quality of wireless communication with other devices.

In accordance with one or more techniques of this disclosure, a single hearing instrument may be configured to operate with different system configurations. For example, a hearing instrument may include a communication system that includes an antenna, impedance matching circuitry, and a transceiver electrically connected to the antenna via the impedance matching circuitry. The available system configurations may be associated with different levels of impedance matching between the antenna and the impedance matching circuitry. Different system configurations may be different configurations of the antenna, impedance matching circuitry, and/or other components of the communication system.

Hence, in accordance with one or more techniques of this disclosure, one or more processors of a hearing instrument may obtain communication performance data for a plurality of device-configuration combinations. Each of the device-configuration combinations includes a combination of a counterpart device and a system configuration of a plurality of system configurations. The system configurations are associated with different levels of impedance matching between an antenna of the communication system and impedance matching circuitry of the communication system. For each respective device-configuration combination of the device-configuration combinations, the communication performance data for the respective device-configuration combination is indicative of values of one or more Quality of Service (QoS) parameters of Radio Frequency (RF) communication between the hearing instrument and the counterpart device of the respective device-configuration combination while the communication system uses the system configuration of the device-configuration combination to communicate with the counterpart device of the respective device-configuration combination. The one or more processors may select, based on the communication performance data for the plurality of system configurations, a system configuration from among the plurality of system configurations for wireless communication with the counterpart device. The one or more processors may configure the communication system to use the selected system configuration for wireless communication with the counterpart device. In this way, the one or more processors may select a system configuration associated with improved communication performance for communicating with the counterpart device.

Furthermore, the performance of E2E communication between a hearing instrument and a counterpart device (e.g., a contralateral hearing instrument, on-body device, etc.) may be dependent on environmental conditions. The environmental conditions are conditions in an environment of the hearing instrument and the counterpart device that affect wireless communication between the hearing instrument and the counterpart device. For instance, atmospheric humidity, electromagnetic interference, radio frequency interference, obstacles, the presence of multipath propagation (e.g., reflection, diffraction, scattering), and other conditions may affect wireless communication between the hearing instrument and the counterpart device.

In accordance with one or more techniques of this disclosure, a hearing instrument may obtain environment data characterizing environmental conditions of a Radio Frequency (RF) communication channel between the hearing instrument and the counterpart device. The hearing instrument may apply one or more machine learning (ML) classification models to the environment data to generate an RF environment classification for the RF communication channel. The hearing instrument may select, based on the RF environment classification, a system configuration from among a plurality of available system configurations that the communication system is configured to use. The hearing instrument may cause the communication system to use the selected system configuration while transmitting and receiving Radio Frequency (RF) signals to and from a counterpart device. Adjusting the system configuration based on the RF environment classification may improve the ability of the ear wearable device to wirelessly communicate with various counterpart devices when there are different environmental conditions.

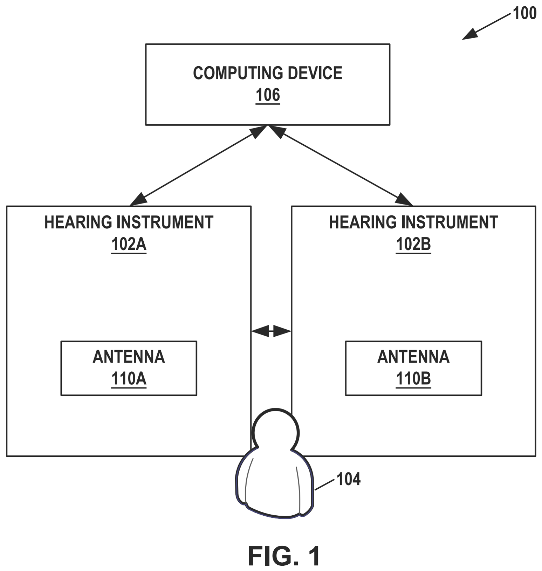

FIG. 1 is a conceptual diagram illustrating an example system 100 that includes hearing instruments 102A, 102B, in accordance with one or more aspects of this disclosure. This disclosure may refer to hearing instruments 102A and 102B collectively, as "hearing instruments 102." A user 104 may wear hearing instruments 102. In some instances, user 104 may wear a single hearing instrument. In other instances, the user may wear two hearing instruments, with one hearing instrument for each ear of user 104.

Hearing instruments 102 may comprise one or more of various types of devices that are configured to provide auditory stimuli to user 104 and that are designed for wear and/or implantation at, on, or near an ear of user 104. Hearing instruments 102 may be worn, at least partially, in the ear canal or concha. One or more of hearing instruments 102 may include behind the ear (BTE) components that are worn behind the ears of user 104. In some examples, hearing instruments 102 comprise devices that are at least partially implanted into or integrated with the skull of user 104. In some examples, one or more of hearing instruments 102 provide auditory stimuli to user 104 via a bone conduction pathway.

In any of the examples of this disclosure, each of hearing instruments 102 may comprise a hearing assistance device. Hearing assistance devices include devices that help a user hear sounds in the user's environment. Example types of hearing assistance devices may include hearing aid devices, Personal Sound Amplification Products (PSAPs), cochlear implant systems (which may include cochlear implant magnets, cochlear implant transducers, and cochlear implant processors), and so on. In some examples, hearing instruments 102 are over-the-counter, direct-to-consumer, or prescription devices. Furthermore, in some examples, hearing instruments 102 include devices that provide auditory stimuli to user 104 that correspond to artificial sounds or sounds that are not naturally in the environment of user 104, such as recorded music, computer-generated sounds, or other types of sounds. For instance, hearing instruments 102 may include so-called "hearables," earbuds, earphones, or other types of devices. Some types of hearing instruments provide auditory stimuli to user 104 corresponding to sounds from the environment of user 104 and also artificial sounds.

In some examples, one or more of hearing instruments 102 may be ITE devices, which include a housing worn within the concha and cymba concha. In some examples, one or more of hearing instruments 102 may be ITC devices, which include a housing worn primarily within the concha. In some examples, one or more of hearing instruments 102 may be CIC device, which include a housing worn primarily within an external portion of the auditory canal. In ITE, ITC, and CIC hearing instruments, a receiver that generates sound is included within the housing of the hearing instruments.

Hearing instruments 102 may implement a variety of features that help user 104 hear better. For example, hearing instruments 102 may amplify the intensity of incoming sound, amplify the intensity of certain frequencies of the incoming sound, attenuate certain frequencies, and/or translate or compress frequencies of the incoming sound. In another example, hearing instruments 102 may implement a directional processing mode in which hearing instruments 102 selectively amplify sound originating from a particular direction (e.g., to the front of the user) while potentially fully or partially canceling sound originating from other directions. In other words, a directional processing mode may selectively attenuate off-axis unwanted sounds. The directional processing mode may help users understand conversations occurring in crowds or other noisy environments. In some examples, hearing instruments 102 may use beamforming or directional processing cues to implement or augment directional processing modes.

In some examples, hearing instruments 102 may reduce noise by canceling out or attenuating certain frequencies. Furthermore, in some examples, hearing instruments 102 may help user 104 enjoy audio media, such as music or sound components of visual media, by outputting sound based on audio data wirelessly transmitted to hearing instruments 102.

Hearing instruments 102 may be configured to communicate with each other. For instance, in any of the examples of this disclosure, hearing instruments 102 may communicate with each other using one or more wirelessly communication technologies. Example types of wireless communication technology include Near-Field Magnetic Induction (NFMI) technology, a 2.4 GHz technology, a BLUETOOTH^{™} technology, a WI-FI ^{™} technology, audible sound signals, ultrasonic communication technology, infrared communication technology, an inductive communication technology, or another type of communication that does not rely on wires to transmit signals between devices. In some examples, hearing instruments 102 use a 2.4 GHz frequency band for wireless communication.

As shown in the example of FIG. 1, system 100 may also include a computing device 106. In other examples, system 100 does not include computing device 106. Computing device 106 may comprise one or more mobile devices, server devices, personal computer devices, handheld devices, wireless access points, smart speaker devices, smart televisions, medical alarm devices, smart key fobs, smartwatches, smartphones, motion or presence sensor devices, smart displays, screen-enhanced smart speakers, wireless routers, wireless communication hubs, prosthetic devices, mobility devices, special-purpose devices, accessory devices, and/or other types of devices. Computing device 106 may be an on-body device or an off-body device. In some examples, computing device 106 includes an accessory device. Accessory devices are devices that are configured specifically for use with hearing instruments, such as hearing instruments 102. Example types of accessory devices may include charging cases for hearing instruments 102, storage cases for hearing instruments 102, media streamer devices, phone streamer devices, external microphone devices, remote controls for hearing instruments 102, and other types of devices specifically designed for use with hearing instruments 102.

One or more of hearing instruments 102 may communicate with computing device 106 using wireless or non-wireless communication links. For instance, hearing instruments 102 may communicate with computing device 106 and/or each other using any of the example types of communication technologies described elsewhere in this disclosure. For example, hearing instruments 102 may communicate with computing device 106 and/or each other using antennas conforming to the antenna designs described in this disclosure. In the example of FIG. 1, hearing instrument 102A includes an antenna 110A and hearing instrument 102B includes an antenna 110B. This disclosure may refer to antenna 110A and antenna 110B collectively as "antennas 110."

Ear-to-ear (E2E) communication may occur between hearing instruments 102. The performance of the E2E communication may be affected by many factors, such as the size and shape of the head of user 104, electromagnetic interference, and other factors. Accordingly, maintaining adequate performance of E2E communication across a large population of human heads may be challenging in conventional hearing instruments, especially while maintaining adequate performance of wireless communication with other types of devices, such as computing device 106. Such challenges may be especially severe for small custom hearing instruments, such as CIC hearing instruments, ITC hearing instruments, and ITE hearing instruments. Existing strategies for maintaining adequate performance of E2E communication have included increasing power output of antennas 110, which results increased drain on the batteries of hearing instruments 102, which in turn may lead to prematurely depletion of the batteries or supply brownout conditions. Other strategies have included increasing the size of antennas but increasing the size of the antennas may increase the overall sizes of hearing instruments 102, which may not be desirable for aesthetic reasons and other considerations.

This disclosure describes techniques that may increase performance of antennas 110 for E2E communication. This increase in performance may reduce the drain on the batteries of hearing instruments 102 and may thereby prevent premature depletion of the batteries and supply brownout conditions. The techniques of this disclosure may also avoid significant changes to the sizes of antennas to achieve such increases in performance.

As described herein, a hearing instrument may perform a process to select among a plurality of different system configurations. The different system configurations may be associated with different levels of impedance matching between the antenna and the impedance matching circuitry. A level of impedance matching may correspond to a portion of signal power that is reflected by the antenna at the feed point of the antenna. The different system configurations may include different configurations of antennas and/or impedance matching networks. For example, an antenna of a first hearing instrument may include a lumped inductor and an antenna of a second hearing instrument does not include the lumped inductor, resulting in the antennas of the first and second hearing instruments having different feed-point impedance levels. In this example, a center-loaded monopole antenna may include an inductor that divides the antenna into two sections that are electrically connected via the inductor. Use of such a center-loaded monopole antenna may enhance the non-tangential nearfield region of an electrical field generated by the antenna. Enhancing the non-tangential nearfield region of the electrical field generated by the antenna may enhance E2E communication and/or an on-body link margin. A hearing instrument may be selected for an individual user from among these hearing instruments based on tested E2E communication performance. In some examples, the antenna and impedance matching circuitry of a hearing instrument have tunable elements that may be enabled or disabled. Different combinations of enabling and disabling the tunable elements correspond to different system configurations. In such examples, a hearing instrument may select which of the system configurations to use for communicating with different counterpart devices. For instance, the hearing instrument may use a first system configuration for E2E communication with a contralateral hearing instrument and a second system configuration for communication with an on-body or off-body device.

In some examples, one or more of hearing instruments 102 may be configured so that the system configuration of a hearing instrument is changeable. For instance, a hearing instrument may include a communication system that includes an antenna, impedance matching circuitry, and a transceiver electrically connected to the antenna via the impedance matching circuitry. One or more processors of the hearing instrument may select a system configuration from among a plurality of available system configurations. In some examples, the available system configurations may include different configurations of the antenna (i.e., antenna configurations). For instance, different antenna configurations may be achieved by electrically connecting or disconnecting various elements of the antenna. In some examples, the available system configurations include different configurations of the impedance matching circuitry (i.e., impedance matching configurations). For instance, different impedance matching configurations may be achieved by switching on or off various circuit pathways in the impedance matching network. In some examples, the available system configurations include different combinations of antenna configurations and impedance matching configurations. The one or more processors may cause the communication system to use the selected system configuration while transmitting a RF signal to a counterpart device and/or receiving an RF signal from the counterpart device.

In some examples, the processors may select the system configuration based on communication performance data. For instance, a hearing instrument may obtain communication performance data for a plurality of device-configuration combinations. Each of the device-configuration combinations includes a combination of a counterpart device and a system configuration of a plurality of system configurations. The system configurations are associated with different levels of impedance matching between the antenna and the impedance matching circuitry. For each respective device-configuration combination of the device-configuration combinations, the communication performance data for the respective device-configuration combination is indicative of values of one or more Quality of Service (QoS) parameters of Radio Frequency (RF) communication between the hearing instrument and the counterpart device of the respective device-configuration combination while the communication system uses the system configuration of the device-configuration combination to communicate with the counterpart device of the respective device-configuration combination.

In some examples, the one or more processors obtain environment data characterizing environmental conditions of a RF communication channel between the hearing instrument and a second device. The one or more processors may apply one or more AI/ML classification models to the environment data to generate an RF environment classification for the RF communication channel. The one or more processors may select the system configuration based on the environment classification.

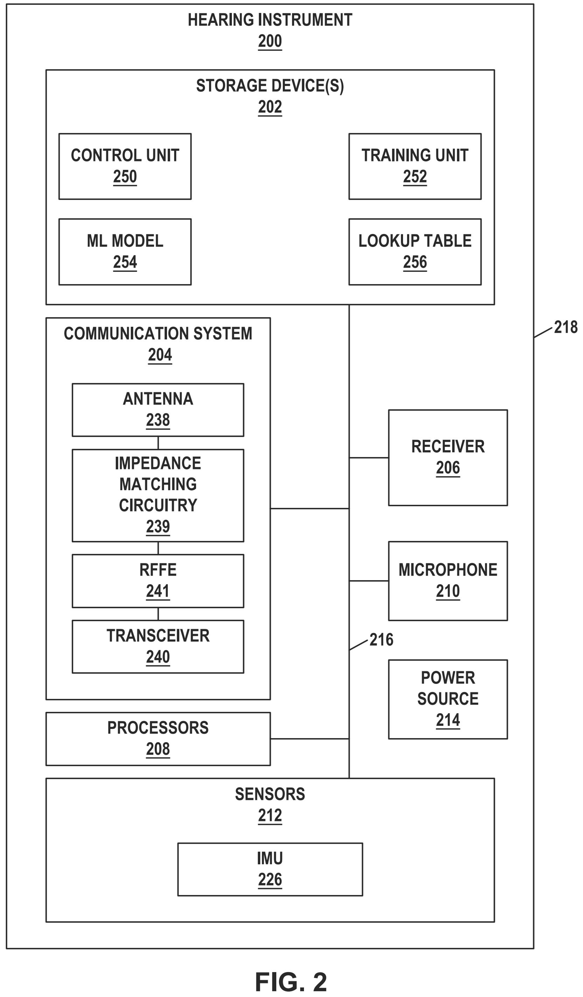

FIG. 2 is a block diagram illustrating example components of hearing instrument 200, in accordance with one or more aspects of this disclosure. Hearing instrument 200 may be either one of hearing instruments 102. Each of hearing instruments 102 may include the same components as hearing instrument 200.

In the example of FIG. 2, hearing instrument 200 comprises one or more storage devices 202, a communication system 204, a receiver 206, one or more processors 208, a microphone 210, a set of sensors 212, a power source 214, and one or more communication channels 216. Communication channels 216 provide communication between storage devices 202, communication system 204, receiver 206, processors 208, microphone 210, and sensors 212. Storage devices 202, communication system 204, receiver 206, processors 208, microphone 210, and sensors 212 may draw electrical power from power source 214. In the example of FIG. 2, each of storage devices 202, communication system 204, receiver 206, processors 208, microphone 210, and sensors 212, power source 214, and communication channels 216 may be contained within a single housing 218. In other examples, hearing instrument 200 may include more, fewer, or different components. For examples, hearing instrument 200 may include two or more communication systems, microphones, power sources, etc. In some examples, hearing instruments 200 does not include sensors 212.

Furthermore, in the example of FIG. 2, sensors 212 include an inertial measurement unit (IMU) 226 that is configured to generate data regarding the motion of hearing instrument 200. IMU 226 may include a set of sensors. For instance, in the example of FIG. 2, IMU 226 includes one or more of accelerometers, a gyroscope, a magnetometer, combinations thereof, and/or other sensors for determining the motion of hearing instrument 200. Hearing instrument 200 may include one or more additional sensors such as a photoplethysmography (PPG) sensor, a blood oximetry sensor, a blood pressure sensor, an electrocardiograph (EKG) sensor, a body temperature sensor, electroencephalography (EEG) sensors, an environmental temperature sensor, an environmental pressure sensor, environmental humidity sensors, skin galvanic response sensors, and/or other types of sensors.

Storage devices 202 may store data. Storage devices 202 may comprise volatile memory and may therefore not retain stored contents if powered off. Examples of volatile memories may include random access memories (RAM), dynamic random access memories (DRAM), static random access memories (SRAM), and other forms of volatile memories known in the art. Storage devices 202 may further be configured for long-term storage of information as non-volatile memory space and retain information after power on/off cycles. Examples of non-volatile memory configurations may include flash memories, or forms of electrically programmable memories (EPROM) or electrically erasable and programmable (EEPROM) memories.

Receiver 206 comprises one or more speakers for generating audible sound. Microphone 210 detects incoming sound and generate one or more electrical signals (e.g., an analog or digital electrical signal) representing the incoming sound.

Communication system 204 may enable hearing instrument 200 to send data to and receive data from one or more other devices, such as another hearing instrument, an accessory device, a mobile device, or another type of device. Communication system 204 may enable hearing instrument 200 to communicate using wireless communication technologies. For instance, communication system 204 enable hearing instrument 200 to communicate using one or more of various types of wireless technology, such as a BLUETOOTH^{™} technology, 3G, 4G, 4G LTE, 5G, ZigBee, WI-FI^{™}, Near-Field Magnetic Induction (NFMI), ultrasonic communication, infrared (IR) communication, or another wireless communication technology. In some examples, communication system 204 may additionally enable hearing instrument 200 to communicate using a cable-based technology, such as a Universal Serial Bus (USB) technology.

As shown in the example of FIG. 2, communication system 204 includes an antenna 238, impedance matching circuitry 239, and a transceiver 240. Antenna 238 may correspond to antenna 110A or 110B in FIG. 1. Transceiver 240 may comprise circuitry configured to generate modulated electrical signals sent to antenna 238 and/or to process electrical signals received from antenna 238. Impedance matching circuitry 239 conducts electrical signals to and from antenna 238 and transceiver 240 via impedance matching circuitry 239. In other words, transceiver 240 is electrically connected to antenna 238 via impedance matching circuitry 239. Impedance matching circuitry 239 may include an impedance matching network. Antenna 238 may be implemented in accordance with any of the example antenna designs described in this disclosure. In some examples, communication system 204 may additionally include a RF front end (RFFE) 241.

In accordance with the techniques of this disclosure, a system configuration of communication system 204 (e.g., an antenna configuration of antenna 238 and/or an impedance matching configuration of impedance matching circuitry 239) may be selected to enhance values of one or more Quality of Service (QoS) parameters of wireless communication between hearing instrument 200 and a counterpart device, such as E2E communication between hearing instrument 200 and a contralateral hearing instrument. Each of the QoS parameters may be a measure of quality of a wireless communication channel. In some examples, physical components of antenna 238 and impedance matching circuitry 239 are selected by a person, such as a hearing professional, during a design process for a custom hearing instrument so that communication system 204 has a selected system configuration. In some examples, a hearing instrument having an antenna and impedance matching circuity with the selected system configuration is selected during a fitting process.

For example, in a first version of impedance matching circuitry 239, a 2 nano-Henry (nH) inductor is included in serial with an input-matching circuity of impedance matching circuitry 239. A second, baseline version of impedance matching circuitry 239 does not include the inductor. Inclusion of the inductor may improve E2E performance but such improvement would not be accounted for in far-field effects. For instance, the following table shows example measurement results of the first and second version of impedance matching circuitry 239.

| Classification | E2E RSSI (Left as central) | E2E RSSI (Right as central) | Total Radiated Power |
|---|---|---|---|
| Baseline | -78.73 dB | -79.16 dB | -10.43 |
| With 2nH | -76.32 | -76.76 | -10.76 |

As shown in the table above, the total radiated power of the version with the 2 nH inductor is diminished by ~0.3 dB relative to the version without the inductor. However, the E2E RSSI in improved in the version with the inductor by ~2.5 dB. That is, in this example, the Total Radiated Power is degraded slightly, but in cases where better matching with a passive component of the communication system is provided, the total radiated power can improve as well, but not to explain the full improvement in ear-to-ear.

In some examples, the system configuration of communication system 204 may be selected while using the same physical components of antenna 238 or impedance matching circuitry 239. For instance, specific components of antenna 238 may switched on or off and/or specific circuitry paths in impedance matching circuitry 239 may be switched on or off so that antenna 238 and impedance matching circuitry 239 have an impedance matching that optimizes values of one or more QoS parameters of wireless communication with a counterpart device, such as E2E communication with a contralateral hearing instrument.

Processors 208 may be processing circuits configured to perform various activities. For example, processors 208 may process the signal generated by microphone 210 to enhance, amplify, or cancel-out particular channels within the incoming sound. Processors 208 may then cause receiver 206 to generate sound based on the processed signal. In some examples, processors 208 include one or more digital signal processors (DSPs). In some examples, processors 208 may cause communication system 204 to transmit one or more of various types of data. For example, processors 208 may cause communication system 204 to transmit data to computing device 106. In some examples, processors 208 may cause communication system 204 to transmit data to another hearing instrument. Furthermore, communication system 204 may receive audio data from computing device 106 and processors 208 may cause receiver 206 to output sound based on the audio data.

In the example of FIG. 2, storage devices 202 store instructions associated with a control unit 250 and a training unit 252. Additionally, storage devices 202 may store a machine learning (ML) model 254 and a lookup table 256. Lookup table 256 may contain entries that map environment classifications and types of counterpart devices to system configurations. In some examples, some or all of the operations of control unit 250 may be performed by specialized processors, such as application-specific integrated circuits. Example environment classifications may include RF environments with or without large scale fading, RF environments with or without small scale fading, RF environments with or without multipath fading, combinations of such RF environments, and so on. Large-scale fading is a measure of signal attenuation that occurs when a signal propagates over long distances or diffracts around large objects. Small-scale fading is a phenomenon that occurs in wireless communication when the amplitude and phase of a radio signal rapidly change over a short distance or time period. Multipath fading is a phenomenon that occurs in wireless communication systems when a radio signal travels to a receiver via multiple paths, causing fluctuations in the signal's magnitude, phase, and angle of arrival.

In some examples, control unit 250 obtains (e.g., generates, receives, etc.) communication performance data for a plurality of system configurations. The communication performance data is indicative of values of one or more QoS parameters of RF communication between hearing instrument 200 and a counterpart device (e.g., a contralateral hearing instrument or other type of device) while communication system 204 uses a specific system configuration to communicate with the counterpart device. The system configurations may be associated with different levels of impedance matching between antenna 238 and impedance matching circuitry 239. Control unit 250 may select, based on the communication performance data, a system configuration from among a plurality of available system configurations for communication with the counterpart device.

In some examples, control unit 250 obtains environment data characterizing a RF environment of hearing instrument 200. In some examples, environment data includes a time series of samples of Received Signal Strength Indicators (RSSI) or other link metric or quality data. The samples of the E2E RSSIs may include (or consist) of a sampled sub-set of E2E RSSIs of the signal. In some examples, the environment data includes data that relate RSSIs to a plurality of frequency bands. Thus, as part of obtaining the environment data, control unit 250 may receive a RSSI from a counterpart device and may select the system configuration based on the RSSI.

Furthermore, in some examples, the counterpart device may perform a similar process to select a system configuration as hearing instrument 200. Thus, in some such examples, control unit 250 may receive a signal from the counterpart device, determine a second RSSI based on the received signal; and transmit the second RSSI to the counterpart device. The counterpart device may use the second RSSI, and potentially other data, to select a system configuration for communicating with hearing instrument 200. The counterpart device may select the system configuration in parallel with hearing instrument 200, before hearing instrument 200, or after hearing instrument 200. In some examples, the environment data may additionally or alternatively include other link characteristics such as Bit-Error-Rate (BER) or Packet-Error-Rate (PER) that can be monitored in real-time and logged versus time and channel. Control unit 250 may use this data to help classify the RF environment, and to detect changes to the RF environment (e.g. moving to a different RF environment).

In some examples, control unit 250 applies ML model 254 to the environment data to generate an environment classification for the RF environment of hearing instrument 200. Control unit 250 may adjust a system configuration of communication system 204 based on the environment classification. Communication system 204 may transmit a RF signal to a counterpart device (e.g., a contralateral hearing instrument, computing device 106, etc.) using the adjusted system configuration.

In some examples, control unit 250 may obtain one or more time series of values of one or more QoS parameters when communicating with a specific counterpart device (e.g., a contralateral hearing instrument, computing device 106, etc.) on a specific channel or frequency range. The time series of values of the QoS parameters may model RF environments in which one or more RF pathloss phenomena occur, such as: large-scale-fading, small-scale fading, multipath fading, and so on. Control unit 250, or another device, may train ML model 254 to associate time series of values of one or more QoS parameters with specific RF environments. In some examples, input to ML model 254 may include, in addition to the one or more time series of values of the QoS parameters, data indicating a channel, data indicating a frequency of the communication channel, data indicating a frequency range, or other types of data. The QoS parameters may include path loss, the RSSI and other measures of wireless communication quality. In this way, ML model 254 may identify an accurate model of the link. In some examples, control unit 250 uses Bluetooth (BT) range determining capabilities to even better characterize and classify the RF Environment on a per device linked basis.

Furthermore, in some examples, in addition to idle connection RSSI monitoring, control unit 250 may implement alternate non-connection approaches, such as monitoring WiFi signal fading over time to characterize the RF environment. For example, control unit 250 may use a signal from IMU 226 to determine if user 104 is moving (e.g. potentially leaving one RF environment and entering a new RF environment). In some examples, control unit 250 may connect to, or monitor, Auracast Broadcasts and other Bluetooth (BT) devices which are advertising, or with already paired, BT devices to acquire environmental data. ML model 254 may be trained to associate an RF environment with environment data from other collocated hearing instruments that have similar RF environmental classification capabilities, or access this information from a database either in an application on a paired phone of user 104, or with a cloud server that the smartphone/app have access to base on determined location of user 104.

In some examples, hearing instrument 200 acts as a Bluetooth Low Energy (BLE) beacon that broadcasts information, such as a location of hearing instrument 200 or acoustic classification information. The acoustic classification information may be information that indicates a classification of an acoustic environment of hearing instrument 200. Control unit 250 may augment the BLE beacon location broadcasting to also broadcast the RF classification information.

In some examples, a computing system associated with an organization that provides hearing instruments, service provider, or another entity may store a database of RF environmental (and/or acoustic) characterizations. In other words, the database may store information that maps environmental data to RF classifications. Information in the database may be communicated (or updated if new to the database) to hearing instrument 200, so no discernment is required for loading an optimal system configuration. In other words, in such examples, the control unit 250 may monitor environment data and use the information from the data and the environment data to look up an RF classification. In some such examples, a remote computing system may implement ML model 254 to learn to associate environment data with RF classifications.

Furthermore, in some examples, with Bluetooth sub-meter location determination accuracy, even sub-environments (e.g., small RF environments within a building/business) may be characterized and may be available via the database, or stored in computing device 106, a smartphone, hearing instrument 200, or a hearing instrument accessory. In some examples, the RF environment may also be characterized based on the direction in which user 104 is facing.

In some examples, control unit 250 applies ML model 254 to environment data to directly determine a system configuration in order to optimize the performance of antenna 238 for communicating with individual counterpart devices, such as on-body device, off-body devices, in-body devices, and so on. Input to ML model 254 may include feature data characterizing an RF propagation environment, inferred or communicated in-band RF interference, use-case (e.g. E2E, back-pocket, front-pocket, cross-body, off-body, or implanted) of the counterpart device, and so on.

In some examples, impedance matching circuitry 239 or communication system 204 includes RFFE 241. RFFE 241 includes a power amplifier (PA) with more transmission RF output and a receiver low noise amplifier (LNA) for a lower noise figure. RFFE 241 may have a bypass mode that disables RFFE 241. Use of RFFE 241 may be associated with higher current drain while disabling RFFE 241 may avoid this current drain. In some examples, control unit 250 may determine whether to enable or disable RFFE 241. Control unit 250 may determine whether to enable or disable RFFE 241 when communicating with specific counterpart devices based on the RF environment classification, location of hearing instrument 200, or other factors.

In some examples, communication system 204 may use adaptive frequency hopping (AFH) when communicating with a counterpart device. A system of communication system 204 that manages AFH may detect that specific frequency bands used in AFH have lower values for QoS parameters than other frequency bands. Accordingly, communication system 204 may "condemn" such frequency bands. Communication system 204 does not use the condemned frequency bands in AFH. Control unit 250 may determine an amount or types of in-band interference based on which and/or how many of the frequency bands are encountering interference. In some examples, communication system 204 may periodically scan all forty Bluetooth Low Energy (BLE) frequency bands and record RSSI data for each of the frequency bands along with corresponding timestamps. Control unit 250 may determine that there is strong 2.4 GHz WiFi interference, or another type of interference, from the pattern of frequency bands at which there is interference. Accordingly, if there is strong 2.4 GHz WiFi interference, control unit 250 may configure communication system 204 to bypass the LNA of RFFE 241, so that receiver inter modulation distortion (IMD) and blocking do not negatively impact the communication link if the LNA were to remain enabled. This may reconfigure/adjust to improve the communication link on both an ambient RF propagation and interference environment. Control unit 250 may also, or additionally, determine whether to enable or disable RFFE 241 (or enable/disable the LNA of RFFE 241) based on a device use-case or based on a location of hearing instrument 200. For instance, in an example of determining whether to enable or disable RFFE 241 based on a device use-case, control unit 250 may determine whether to enable or disable RFFE 241 depending on whether the counterpart device is an on-body device (e.g., a contralateral hearing instrument) or an off-body device (e.g., a mobile phone in a pocket of user 104). Thus, the system configuration (e.g., impedance matching configuration, antenna configuration, and/or circuit configuration) can be different for the two cases.

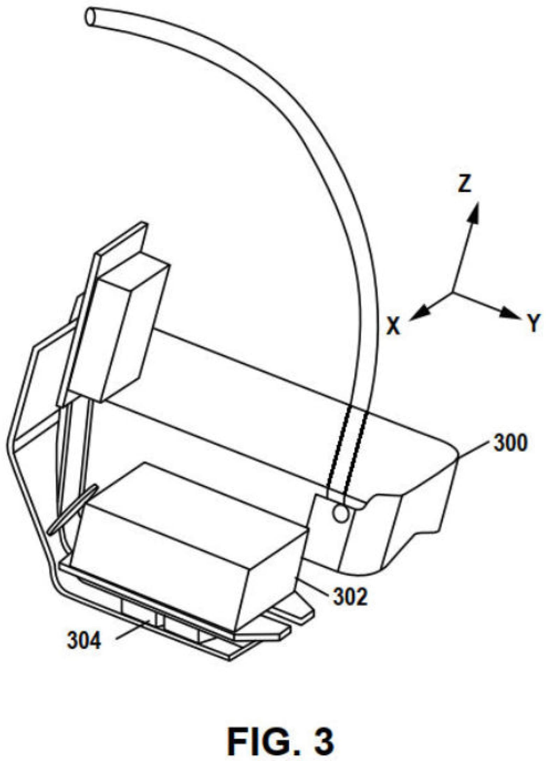

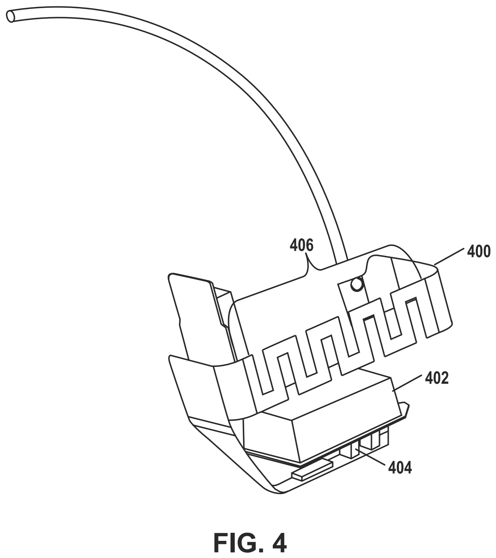

FIG. 3 is a conceptual diagram illustrating a first example antenna 300, in accordance with one or more aspects of this disclosure. In the example of FIG. 3, antenna 300 is coupled to a transceiver 302 via a matching network 304. FIG. 4 is a conceptual diagram illustrating a second example antenna 400, in accordance with one or more aspects of this disclosure. Antenna 400 is coupled to a transceiver 402 via a matching network 404. Antenna 400 is similar to antenna 300 except segment 406 of antenna 400 is meandered instead of segment 406 being straight as shown in FIG. 3. Because segment 406 is meandered instead of being straight, segment 406 may simulate a distributed inductor in-line with antenna 400. Accordingly, because segment 406 is meandered instead of being straight, antenna 300 and antenna 400 have different impedance matching with the same transceiver circuitry. In the example shown in FIG. 4, antenna 400 is a monopole and segment 406 is a distributed inductive center-loaded portion which alone alters near E-field of antenna 400 to improve the creeping wave. Accordingly, a designer may select among antenna 300 and antenna 400 to optimize one or more QoS parameters of E2E communication. In some examples, the E2E path gain of antenna 400 is ~3.5 dB greater than antenna 300. Antenna 400 may be an example of an antenna that has a center-loading configuration.

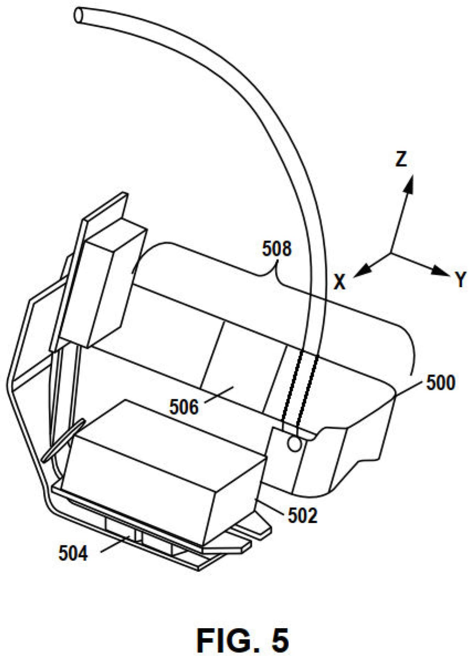

FIG. 5 is a conceptual diagram illustrating a third example antenna 500, in accordance with one or more aspects of this disclosure. Antenna 500 is coupled to a transceiver 502 via a matching network 504. Antenna 500 is similar to antenna 300 except that an inductor 506 is disposed on a segment 508 of antenna 500. Because segment 508 includes inductor 506, antenna 300 and antenna 500 have different impedance matching with the same transceiver circuitry included in 304, 504. Thus, antenna 500 (or a hearing instrument that includes antenna 500) may be selected for use instead of the version of antenna 500 without inductor 506 to optimize one or more QoS parameters of a communication channel for communicating with a second device, such as a contralateral hearing instrument. In some examples, inductor 506 is a 4 nH inductor. Modeling and simulation prove the improvement due to near field improvement of the normal (to the head in the location of antenna) polarization of Electric field, while the far-field performance is largely unaltered.

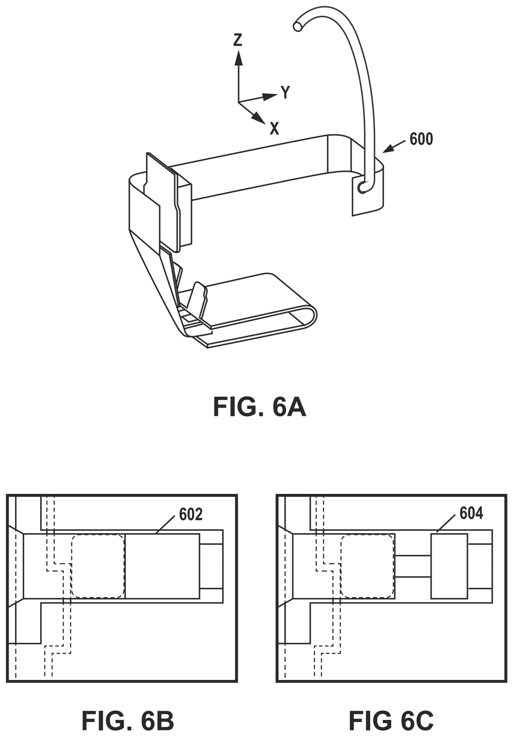

FIG. 6A is a conceptual diagram illustrating an example antenna 600, in accordance with one or more aspects of this disclosure. Antenna 600 is coupled to a transceiver via a matching network. FIG. 6B is a conceptual diagram illustrating an example matching network 602 to conjugately match the transceiver to the antenna, whereas matching network 604 in FIG. 6C includes an example matching network 604 in accordance with one or more techniques of this disclosure. For example, the matching network 604 in FIG. 6C may be adding an effective series inductive component to alter the antenna E-field in near field. While antenna 600 may remain the same, the impedance match may differ based on the changes in matching networks 602 and 604. Any combinations of techniques illustrated in FIGS. 4, 5 and 6 can be used alone or in combination to improve the creeping wave antenna performance.

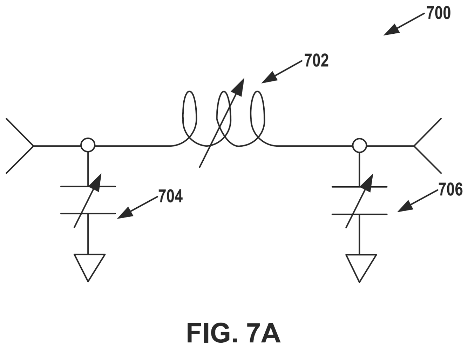

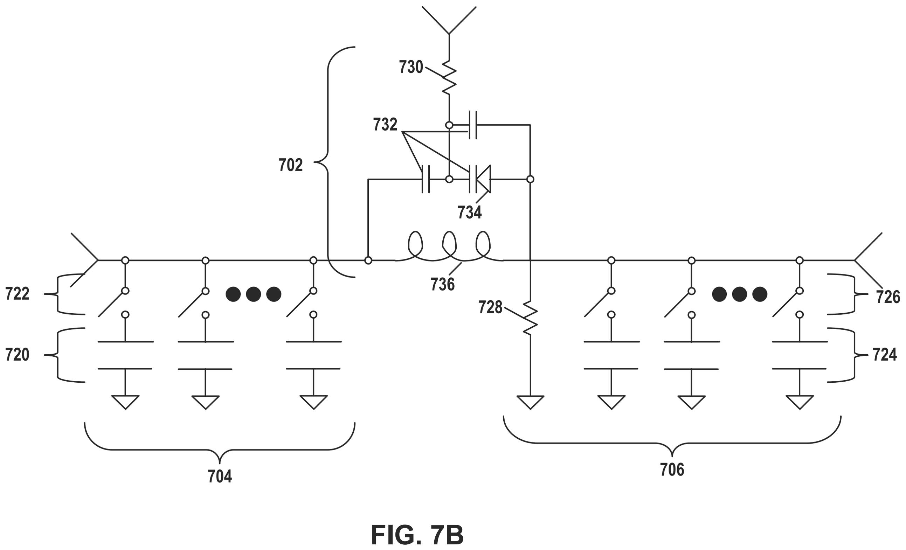

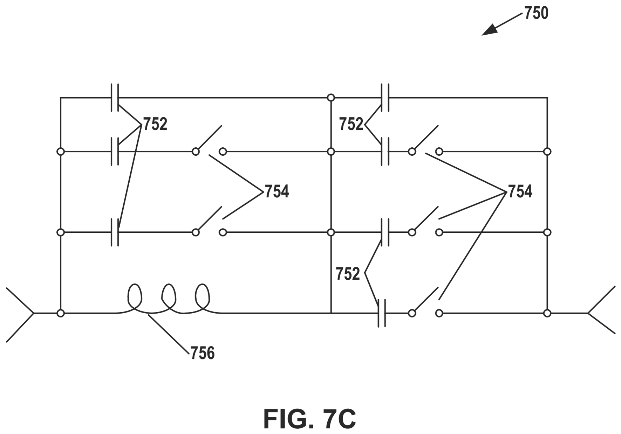

FIG. 7A, 7B, and 7C are conceptual diagrams illustrating an example impedance matching network 700, in accordance with one or more aspects of this disclosure. Impedance matching network 700 is an example of a π-type impedance matching network. In the example of FIG. 7A, impedance matching network 700 includes an inductive portion 702, a capacitive portion 704, and a capacitive portion 706. Capacitive portion 704 and capacitive portion 706 are arranged in parallel and connected to ground on one side and to inductive portion 702 on the other side.

FIG. 7B provides more details regarding inductive portion 702, capacitive portion 704 and capacitive portion 706. In the example of FIG. 7B, capacitive portion 704 includes a plurality of capacitors 720 that are connected to ground on one side and to switches 722 on the other side. Similarly, capacitive portion 706 includes a plurality of capacitors 724 that are connected to ground on one side and to switches 726 on the other side. Switches 722 and switches 726 are connected in parallel to inductive portion 702. In the example of FIG. 7B, capacitive portion 706 also includes a resistor 728 that is connected to ground on one side and inductive portion 702 on the other side. Switches 722 and switches 726 may be individually opened or closed so that a communication system (e.g., communication system 204) that includes impedance matching network 700 may have an impedance matching corresponding to a selected impedance matching configuration. Inductive portion 702 includes a resistor 730, capacitors 732, a diode 734, and an inductor 736.

FIG. 7C illustrates an example alternative impedance matching network 750. In the example of FIG. 7C, impedance matching network 750 includes a set of capacitors 752, a set of switches 754, and an inductor 756. Switches 754 may be individually opened or closed so that a communication system (e.g., communication system 204) that includes impedance matching network 700 may have an impedance matching corresponding to a selected impedance matching configuration. Like impedance matching network 700, impedance matching network 750 is a series LC tank circuit.

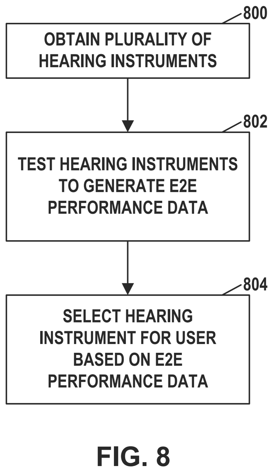

FIG. 8 is a flowchart illustrating an example operation for selecting a hearing instrument, in accordance with one or more aspects of this disclosure. In the example of FIG. 8, a tester obtains a plurality of hearing instruments (800). In some examples, the tester is a technician, audiologist, or other type of person who assists in selecting hearing instruments for a user of the hearing instruments. In some examples, the user themselves may be the tester.

Each of the hearing instruments includes a communication system that comprises an antenna and an impedance matching network. The respective communication system having a different impedance matching from other hearing instruments of the plurality of hearing instruments. For instance, the communication systems of the hearing instruments may have different system configurations. Thus, the antennas of the hearing instruments may have different feed-point impedances.

In some examples, such as the example of FIGS. 7A-7C, the communication systems of each of the hearing instruments have the same physical configuration but different elements of the antennas or impedance matching networks are electronically connected or disconnected so that the antennas have different impedance matching. In some examples, the antennas and/or impedance matching networks of different hearing instruments includes different physical components. For example, the antenna of a first hearing instrument of the plurality of hearing instruments may include a lumped inductor and a second hearing instrument of the plurality of hearing instruments does not include any lumped inductor. In some examples, electrical circuits and tunable elements of impedance matching circuitry for impedance matching between the transceiver and the antenna of a hearing instrument may be identical, but the tunable elements may be tuned on a per-person basis or a per-hearing instrument basis when worn on-head, to improve E2E performance when worn on the head of a patient.

For each hearing instrument set of the plurality of hearing instruments, the tester may test the hearing instrument to generate E2E performance data for the hearing instrument set (802). The E2E performance data for the hearing instrument set may be indicative of one or more QoS parameters of wireless communication between a hearing instrument of the hearing instrument set and a contralateral hearing instrument while the hearing instrument and the contralateral hearing instrument are worn by a user. In some examples, the QoS parameters include a Received Signal Strength Indicator (RSSI).

The tester may select a hearing instrument set for the user from among the plurality of hearing instruments based on the E2E performance data for the hearing instruments (804). For example, the tester may select the hearing instrument set having the highest QoS parameters.

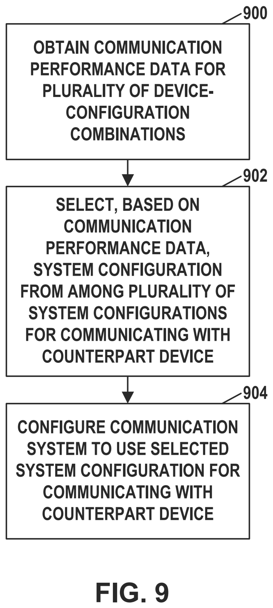

FIG. 9 is a flowchart illustrating an example operation of hearing instrument 200 in accordance with one or more aspects of this disclosure. In the example of FIG. 9, control unit 250 may obtain communication performance data for a plurality of device-configuration combinations (900). Each of the device-configuration combinations includes combinations of a counterpart device (e.g., a contralateral hearing instrument, an on-body device, etc.) and a system configuration of a plurality of system configuration. The system configurations are associated with different levels of impedance matching between the antenna and the impedance matching circuitry. For each respective device-configuration combination of the device-configuration combinations, the communication performance data for the respective device-configuration combination is indicative of values of one or more QoS parameters of RF communication between the hearing instrument and the counterpart device of the respective device-configuration combination while the communication system uses the respective system configuration to communicate with the counterpart device of the respective device-configuration combination. In an example where the counterpart device is a contralateral hearing instrument, the communication performance data for the device-configuration combination may include E2E performance data for the device-configuration combination. In some examples, the QoS parameters include a packet error rate. In some examples, the QoS parameters include a Received Signal Strength Indicator (RSSI).

In some examples, antenna 238 includes one or more antenna elements, impedance matching circuitry 239 includes one or more circuit pathways, and the system configurations correspond to different combinations of the one or more antenna elements of antenna 238 and the one or more circuit pathways of impedance matching circuitry 239. In some examples, the components of communication system 204 include a RF front end (RFFE) 241, and the plurality of system configurations includes one or more system configurations in which RFFE 241 is enabled and one or more system configurations in which the RFFE is disabled.

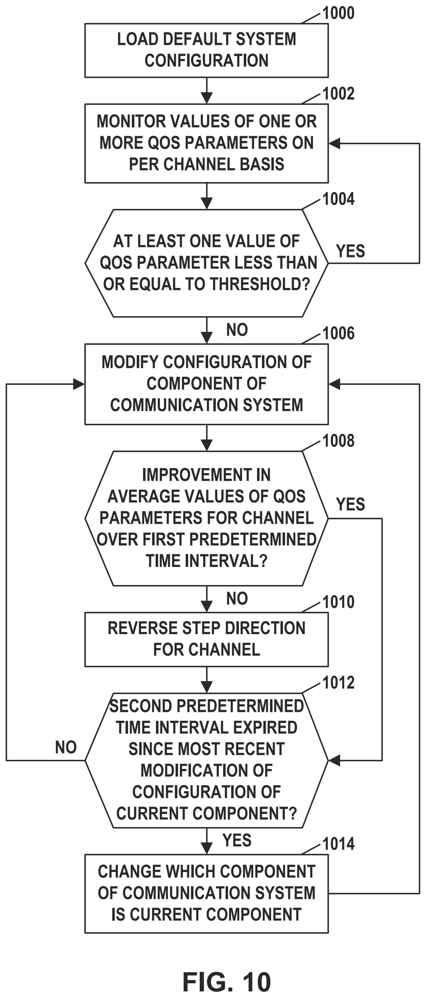

Control unit 250 may select, based on the communication performance data, a system configuration from among a plurality of available system configurations (902). Control unit 250 may select the system configuration in one of a variety of ways. FIG. 10, which is described in greater detail below, describes an example operation to select a system configuration for a communication link based on the communication performance data.

In other examples, control unit 250 may select the system configuration of communication system 204 in other ways. For example, control unit 250 may apply a ML model (e.g., ML model 254) to the communication performance data for the device-configuration combinations to generate an output and select the system configuration based on the output of the ML model. For example, control unit 250 may apply a neural network model to the communication performance data to generate an output that includes confidence scores for different system configurations. The neural network model may have an input layer that has input neurons that correspond to different types of communication performance data for one or more device-configuration combinations. An output layer of the neural network model may include output neurons that correspond to different system configurations. Values generated by the output neurons may indicate confidence scores, or a normalization function may be applied to the values generated by the output neurons to generate the confidence scores. The neural network model may include one or more hidden layers between the input layer and the output layer. The layers may be fully connected. An activation function (e.g., ReLU, sigmoid, etc.) may be applied to the output values of each layer of the neural network model. To select the system configuration, control unit 250 may select the system configuration with the greatest confidence score. The neural network model may be trained using a backpropagation/gradient-descent algorithm based on an error function that compares expected system configurations with system configurations predicted by the neural network model.

In another example, control unit 250 may calculate scores for each of the device-configuration combinations. Control unit 250 may calculate a score for a device-configuration combination using a linear combination of the communication performance data for the device-configuration combination. In other words, values of different types of communication performance data may be multiplied by predetermined weights and summed to calculate scores for the device-configuration combination. Control unit 250 may select the system configuration based on the scores for the device-configuration combinations. For instance, control unit 250 may select the system configuration of the device-configuration combination with the highest score.

Control unit 250 may configure communication system 204 to use the selected system configuration for wirelessly communicating with the counterpart device (904). For example, control unit 250 may control switches or other elements in antenna 238 and/or impedance matching circuitry 239 so that communication system 204 has the selected system configuration while transmitting and receiving RF signals. In an example where the counterpart device is a contralateral hearing instrument, the contralateral hearing instrument may be configured to use same the selected system configuration while wirelessly communicating with hearing instrument 200.

In some examples, control unit 250 performs the operation of FIG. 9 with device-configuration combinations in which two or more of the combinations include different counterpart devices. Thus, for each respective system configuration of a plurality of system configurations, control unit 250 may obtain communication performance data for a plurality of device-configuration combinations. The device-configuration combination is a combination of the respective counterpart device and the respective system configuration, the communication performance data for the device-configuration combination being indicative of values of one or more QoS parameters of RF communication between the hearing instrument and the respective counterpart device while using the respective system configuration. Control unit 250 may select, based on the communication performance data for the plurality of device-configuration combinations, a system configuration from among the plurality of system configurations for wireless communication with the respective counterpart device. Control unit 250 may configure communication system 204 to use the selected system configuration for wireless communication with the respective counterpart device.

FIG. 10 is a flowchart illustrating an example operation of hearing instrument 200 for selecting a system configuration for a communication link, in accordance with one or more techniques of this disclosure. Control unit 250 may perform the operation of FIG. 10 on a per channel basis. In other words, control unit 250 may perform the operation of FIG. 10 separately for different counterpart devices. In the example of FIG. 10, control unit 250 may load a default system configuration for communicating with a counterpart device (1000). The default system configuration may be a predetermined system configuration among a plurality of available system configurations. The default system configuration may include a default impedance matching configuration and/or a default antenna configuration.

Additionally, control unit 250 may monitor values of one or more QoS parameters for a communication channel (1002). For instance, control unit 250 may monitor a time series of packet error rate values. Since control unit 250 may perform the operation of FIG. 10 for multiple counterpart devices each having a different wireless communication channel, control unit 250 may obtain one or more time series of values of the one or more QoS parameters for the different communication channels. In some examples, control unit 250 may obtain (e.g., receive or calculate) packet error rate values over time as hearing instrument 200 communicates using the wireless communication channels, thus obtaining separate time series of the packet error rate values for each of the wireless communication channels. Each of the communication channels may be a wireless communication channel for communicating with a different device, such as a contralateral hearing instrument, an on-body device, or another counterpart device.

Control unit 250 may then compare the values of the one or more QoS parameters for a communication channel and one or more thresholds. For instance, in the example of FIG. 10, control unit 250 may determine whether at least one value of the one or more QoS parameters is less than or equal to a packet error rate threshold (1004). If no value of the one or more QoS parameters for the communication channel is less than or equal to the packet error rate threshold ("NO" branch of 1004), control unit 250 may continue to monitor the values of the one of more QoS parameters for the communication channel (1002). For instance, if the average packet error rate value for the communication channel is less than the threshold, control unit 250 may continue to monitor the time series of packet error rate values for the communication channel.

On the other hand, if at least one value of the one or more QoS parameters for the communication channel is less than or equal to the packet error rate threshold ("YES" branch of 1004), control unit 250 may modify a configuration of a current component of communication system 204 for use when sending and/or receiving RF signals using the communication channel, thereby modifying a system configuration of communication system 204 (1006). In other words, control unit 250 may try sending and/or receiving RF signals using a different system configuration for the communication channel. Components of communication system 204 may include antenna 238, impedance matching circuitry 239, an RFFE, and so on. Different available configurations of a component of communication system 204 may be associated with a different index value such that similar configurations of the current component are associated with similar index values. In some examples, the index values greater index values may be associated with greater levels of feed point impedance matching between antenna 238 and impedance matching circuitry 239 and lesser index values may be associated with lesser levels of feed point impedance matching between antenna 238 and impedance matching circuitry 239. Control unit 250 may use a current index value for the current component to indicate which of the configurations of the current component is currently used for sending and/or receiving RF signals using a particular channel. When modifying the configuration of the current component for use when sending and/or receiving RF signals using the communication channel, control unit 250 may increment or decrement the current index value for the current component depending on a step direction for the current component. In some examples, control unit 250 may increment or decrement the current index value for the current component by incrementing or decrementing a least significant bit (LSB) of the current index value for the current component.

After modifying the system configuration 1006, control unit 250 may determine whether there is an improvement in the values of one or more QoS parameters of the communication channel over a first predetermined time interval while communicating using the modified configuration of the current component (1008). In some examples, the QoS parameters include one or more of an average signal RSSI of the communication channel, a Noise RSSI of the communication channel, and so on. In some examples, the first predetermined time interval is 10 seconds, 30 seconds, 60 seconds, or another time interval.

If there is no improvement in the average values of the QoS parameters for the communication channel over the first predetermined time interval ("NO" branch of 1008), control unit 250 may reverse the step direction for the current component (1010). For example, if the step direction for the current component is currently associated with incrementing the current index value for the current component, control unit 250 may change the step direction for the current component to be associated with decrementing the current index value for the current component when modifying the configuration for the current component in the future. Similarly, if the step direction for the current component is currently associated with decrementing the current index value for the current component, control unit 250 may change the step direction for the current component to be associated with incrementing the current index value for the current component when modifying the configuration for the current component in the future.

On the other hand, if there is an improvement in the average values of the QoS parameters for the communication channel over the first predetermined time interval ("YES" branch of 1008) or after reversing the step direction for the current component, control unit 250 may determine whether a second predetermined time interval has expired since a most recent time that control unit 250 modified the configuration for the current component (1012). If a second predetermined time interval is not expired since the most recent time the configuration of the current component was modified ("NO" branch of 1012), control unit 250 may again modify the configuration of the current component for use when sending and/or receiving RF signals using the communication channel (1006). Control unit 250 may modify the configuration of the current component in the step direction, which may have been reversed in step 1010.

If the second prescribed time interval has expired since the most recent modification of the configuration of the current component ("YES" branch of 1012), control unit 250 may change which component of communication system 204 is the current component (1014) and may subsequently repeat steps 1006 - 1014 with the new current component. Thus, if the current component was previously antenna 238, the new current component may be impedance matching circuitry.

Thus, in the example of FIG. 10, based on a comparison of the values of one or more of the QoS parameters and one or more thresholds, control unit 250 may perform an iteration of a tuning process that comprises: modifying a configuration of a current component of the plurality of components according to a step direction for the current component, the current component being one of the one or more components of the communication system; determining whether the values of the one or more of the QoS parameters improve over a first predetermined time interval while using the modified configuration for transmitting and receiving second RF signals to and from the counterpart device; reversing the step direction for the current component depending on whether the values of the one or more of the QoS parameters improve over the first predetermined time interval; determining whether a second predetermined time interval has expired since a most recent modification to the configuration of the current component; based on the second predetermined time interval not having expired since the most recent modification to the configuration of the current component, performing a next iteration of the tuning process; and based on the second predetermined time interval having expired since the most recent modification to the configuration of the current component, changing which of the plurality of components is the current component for the next iteration of the tuning process.

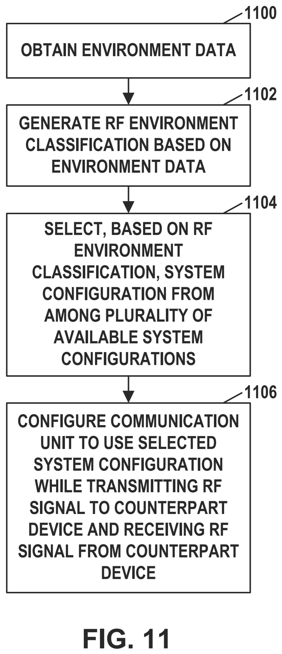

FIG. 11 is a flowchart illustrating an example operation of hearing instrument 200 to select a system configuration based on an RF environment classification, in accordance with one or more aspects of this disclosure. In some examples, control unit 250 performs the operation of FIG. 11 when hearing instrument 200 and a contralateral hearing instrument are initially placed on a head of a user. In some examples, control unit 250 performs the operation of FIG. 11 on a periodic basis. In some examples, control unit 250 performs the operation of FIG. 11 in response to various events, such as arriving at a specific location, in response to determining that hearing instrument 200 is in a vehicle, and so on.

In the example of FIG. 11, control unit 250 of hearing instrument 200 obtains environment data (1100). The environment data may characterize environmental conditions of a RF communication channel between hearing instrument 200 and a counterpart device, such as a contralateral hearing instrument. In some examples, the environment data includes a time series of samples of E2E RSSIs of a signal received from a contralateral hearing instrument. The samples of the E2E RSSIs may include (or consist) of a sampled sub-set of E2E RSSIs of the signal. In some examples, the environment data may include a measure of electromagnetic interference in the RF environment. In some examples, the environment data may include information about a type of the counterpart device, a type of communication (e.g., E2E, on-body, off-body, cross-body, etc.), environment type, and so on. Control unit 250 may obtain the environment data in one or more ways. For example, control unit 250 may obtain one or more types of environment data by performing processes to measure the one or more types of environment data. In some examples, control unit 250 may receive one or more types of environment data from the counterpart device, such as a contralateral hearing instrument or another device.

Control unit 250 may generate an RF environment classification for the RF communication channel based on the environment data (1102). Control unit 250 may determine the RF environment from among a predetermined, limited set of RF environment classifications. In other words, the set of RF environment classifications is finite. In some examples, the RF environment classifications in the set of RF environment classifications corresponds to previously characterized RF environments. In some examples, the RF environment classifications in the set of RF environment classifications are associated with wireless link propagation model parameters of RF environments to which the user is often exposed. For instance, the RF environment classifications may correspond to off-body communication, wireless link propagation model parameters of indoor RF environments (e.g., large room, medium room, small room, amount of multipath clutter, large auditorium-like venues, cluttered restaurants with significant human motion within, etc.), wireless link propagation model parameters of outdoor RF environments (e.g., poor ground reflection, better ground-refection), wireless link propagation model parameters for on-body communication (e.g., E2E communication, ear-to-pocket communication, same-side of body communication, cross-body communication, front or back-pocket communication), wireless link propagation model parameters for communication in a motor vehicle; wireless link propagation model parameters for ear-to-implant communication, and so on.

In some examples, control unit 250 applies one or more ML models, such as ML model 254, to the environment data to generate an RF environment classification for the RF communication channel between hearing instrument 200 and the counterpart device. In some examples, control unit 250 applies one or more ML models, such as ML model 254, to the environment data to determine a system configuration for the RF communication channel between hearing instrument 200 and the counterpart device. ML model 254 may be implemented in various ways. For example, ML model 254 may be implemented as a neural network model. In this example, the neural network model may include an input layer and an output layer. In some examples, the neural network model additionally includes one or more hidden layers between the input layer and the output layer. Each of the layers includes a set of artificial neurons. The layers may be fully connected. The artificial neurons of the input layer may correspond to different types of environment data, such as wireless link propagation model parameters, RSSIs, and so on. The artificial neurons of the input layer may also include one or more artificial neurons that correspond to a device type of counterpart devices. The artificial neurons of the output layer may correspond to different RF environment classifications. In some examples, a scaling function is applied to the output of the artificial neurons of the output layer generate confidence values indicating levels of confidence that the RF environment is the corresponding RF environment classification. In some examples, the artificial neurons of the output layer may correspond to different system configurations. In some examples, a scaling function is applied to the output of the artificial neurons of the output layer generate confidence values indicating levels of confidence that the system configuration is best for the current RF environment. In such examples, control unit 250 may select a system configuration based on the levels of confidence for the system configurations. For instance, control unit 250 may select a system configuration with a greatest level of confidence. Control unit 250 may apply ML model 254 to the environment data by providing the environment data as input to the input neurons of the neural network model and performing a forward pass through the neural network model.

The neural network model may be trained (e.g., by training unit 252) using training examples that specify environment data as input and that specify human-determined RF environment classifications as ground-truth expected outputs. In other examples, the neural network model may be trained (e.g., by training unit 252) using training examples that specify environment data as input and that specify human-determined system configurations as ground-truth expected outputs. A training system (which may be implemented by a computing system separate from hearing instruments 102 and/or computing device 106) may use a loss function to generate loss values based on outputs generated by the neural network values and the ground-truth expected outputs. The training system may use the loss function in a backpropagation process to update values of input parameters of the artificial neurons.

In other examples, ML model 254 is implemented using a decision tree model or a k-means clustering model. For instance, in a k-means clustering model, each of RF environment classification of a plurality of RF environment classifications may be associated with a different cluster. Each cluster is associated with a different location in a multi-dimensional space. The number of dimensions in the multi-dimensional space may be equal to the number of types of environmental data. Training unit 252 may use the k-means clustering algorithm to determine the locations associated with the clusters. To apply ML model 254 to the environmental data to determine the RF environment classification, control unit 250 may determine a location in the multidimensional space defined by the environment data, determine which of the locations associated with the clusters is closest in the location defined by the environment data, and determine that the RF environment classification is the RF environment classification associated with the determined location. A similar example may use system configurations instead of environmental classifications.

In this way, control unit 250 may obtain environment data characterizing environmental conditions of a RF communication channel between the hearing instrument and the counterpart device. Control unit 250 may apply one or more ML classification models to the environment data to generate an RF environment classification for the RF communication channel. Control unit 250 may select the system configuration of communication system 204 based on the environment classification.

In some examples, control unit 250 generates an RF environment classification based on factors, such as the time of day, personal patterns of the user, labeled locations of the user (e.g., home, office, car-type, etc.), and so on, without using the environment data to generate the RF environment classification. In some examples, with accurate location information (GPS, WiFi ID, inertial navigation or Bluetooth beacons, or other indoor location enhancements to GPS), a cloud server from a qualified service provider, control unit 250, or other system may maintain a database (map) that maps locations to RF classifications. This may eliminate the need for control unit 250 to classify the RF environment based on the environment data (e.g., using ML model 254), because such a determination of the RF environment classification may be provided by computing device 106, a cloud server, or another type of computing system. In some examples, an application downloads a database of locations and relevant wireless (or acoustic) RF classifications and other information, to allow hearing instruments 102 to determine a system configuration for communicating with the counterpart device in the RF environment of current location. Thus, in some examples, control unit 250 selects the system configuration based on a location of hearing instrument 200.

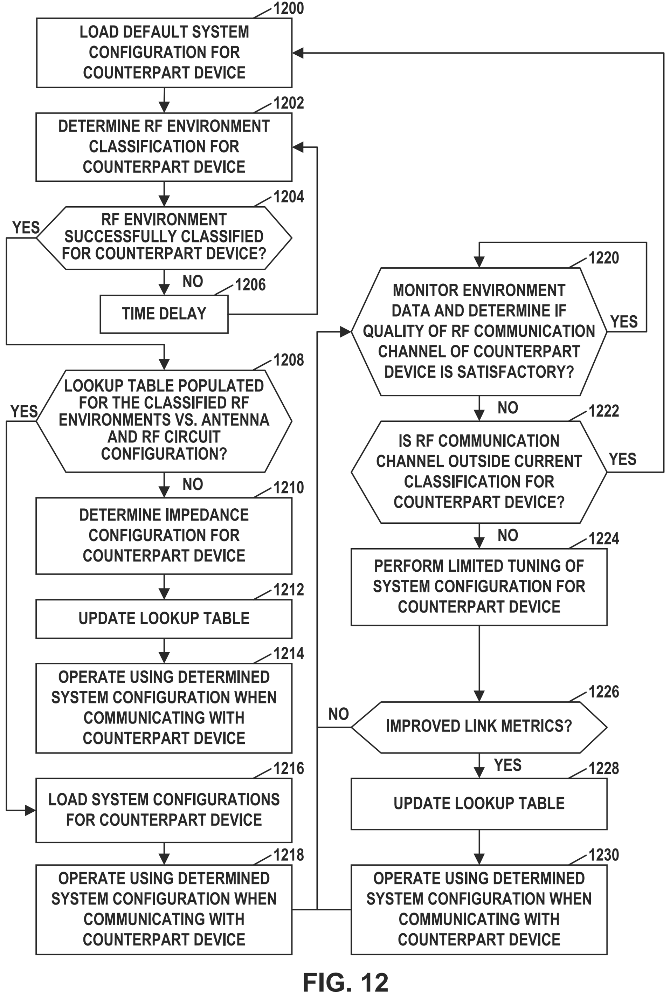

Additionally, control unit 250 may select, based on the RF environment classification, a system from among a plurality of available system configurations that communication system 204 is configured to use (1104). In some examples, each of the system configurations is associated with a different level of impedance matching between antenna 238 and impedance matching circuitry 239. For instance, each of the system configurations may be associated with a different feed-point impedance of antenna 238. FIG. 12, which is described in greater detail below, describes an example operation for selecting a system configuration.

Additionally, control unit 250 cause communication system 204 to use the selected system configuration while transmitting a Radio Frequency (RF) signal to a counterpart device or receiving an RF signal from the counterpart device (1106). The counterpart device may be a contralateral hearing instrument, computing device 106, or another computing device. Causing communication system 204 to use the selected system configuration may include disabling or enabling specific elements of antenna 238 and/or impedance matching circuitry 239. Control unit 250 may select different system configurations for communication with different counterpart devices. For instance, control unit 250 may select the system configuration different elements of antenna 238 and/or impedance matching circuitry 239 are enabled or disabled depending on which counterpart device of a plurality of different counterpart devices is being communicated with.

In some examples, control unit 250 may change other aspects of how hearing instrument 200 communicates with the counterpart device based on the RF environment classification. For example, due to interference in specific RF environments, it may be difficult to communicate using specific frequencies. Accordingly, processors 208 may be configured to alter, based on the RF environment classification, a frequency hopping pattern for the RF signal.

By identifying the RF wireless environment for the counterpart device, control unit 250 may select a predetermined system configuration of communication system 204 to improve wireless link performance for communicating with the counterpart device in the current RF environment. Determining the system configuration based on the RF environment classification may allow for faster, more meaningful identification of the system configuration, so that the RF communication channel can be quickly configured to operate with improved link margins, and balance power consumption of antenna 238 and impedance matching circuitry 239, with what is required to maintain adequate link margin in that RF environment. Link margin is a parameter to determine a strength and reliability of a wireless communication link (between two hearing instruments or hearing instrument-to-phone etc.). If the link margin is high, the wireless communication link is robust. A negative link margin may cause a weak communication link, and loss of features. A tuned system configuration for a particular wireless environment would help the wireless link budget, causing a robust communication link.

FIG. 12 is a flowchart illustrating an example operation for selecting a system configuration, in accordance with one or more aspects of this disclosure. Control unit 250 may perform the operation of FIG. 12 for each of one or more counterpart devices. Thus, control unit 250 may configure antenna 238 and impedance matching circuitry 239 to operate using different system configurations when communicating with different counterpart devices. In some examples, control unit 250 performs the operation of FIG. 12 when hearing instrument 200 and a contralateral hearing instrument are initially placed on a head of a user. In some examples, control unit 250 performs the operation of FIG. 12 on a periodic basis. In some examples, control unit 250 performs the operation of FIG. 12 in response to various events, such as arriving at a specific location, in response to determining that hearing instrument 200 is in a vehicle, and so on.

Each of hearing instrument 200 and a contralateral hearing instrument may perform the operation of FIG. 12. This may ensure that both hearing instrument 200 and the contralateral hearing instrument both receive and transmit data to each other efficiently. In some examples, hearing instrument 200 and the contralateral hearing instrument perform the operation sequentially, e.g., first hearing instrument 200 and then contralateral hearing instrument. In some examples, hearing instrument 200 and the contralateral hearing instrument operate in cooperation. In such examples, hearing instrument 200 may transmit a wireless signal while the contralateral hearing instrument receives the wireless signal and measures an RSSI of the received wireless signal. The contralateral hearing instrument may transmit the RSSI to hearing instrument 200. Hearing instrument 200 may then adjust the system configuration of communication system 204 (e.g., the antenna configuration of antenna 238 and/or the impedance matching configuration of impedance matching circuitry 239), thereby adjusting impedance matching, and changing the creeping wave performance of antenna 238 for E2E communication. The contralateral hearing instrument may then perform the same process to improve creeping wave performance of the antenna of the contralateral hearing instrument for E2E communication.

In the example of FIG. 12, control unit 250 loads a default system configuration of communication system 204 for a counterpart device (1200). The counterpart device is a device that is connected to hearing instrument 200 via an RF communication channel. In some examples, the RF communication channel is a Bluetooth Low Energy (BLE) communication channel. The default system configuration is one of a plurality of available system configurations.

In some examples, the counterpart device is a contralateral hearing instrument. In some examples, the counterpart device is a handheld device (e.g., a mobile phone, tablet device, etc.), a wearable device (e.g., a smartwatch, smart clothing, etc.), an off-body device, a hearing instrument accessory device (e.g., a remote microphone device, a charging case, a media streaming device, etc.), or another type of device. The default system configuration for the counterpart device may be a predetermined system configuration associated with a device type to which the counterpart device belongs. In some examples where the counterpart device is a contralateral hearing instrument, the default system configuration may be further selected based on a size or shape of the user's head.

Additionally, control unit 250 may determine an RF environment classification for the counterpart device (1202). For example, control unit 250 may obtain environment data characterizing environmental conditions of a RF communication channel between hearing instrument 200 and the counterpart device. The environment data may include a time series of samples of E2E RSSIs of a signal received from a contralateral hearing instrument. The samples of the E2E RSSIs may include (or consist) of a sampled sub-set of E2E RSSIs of the signal. In some examples, the environment data may include a measure of electromagnetic interference in the RF environment. In some examples, the environment data may include information about a type of the counterpart device, a type of communication (e.g., E2E, on-body, off-body, cross-body, etc.), environment type, and so on. Control unit 250 may determine the RF environment classification in accordance with any of the examples provided elsewhere in this disclosure for determining the RF environment classification.

Control unit 250 determines whether an RF environment classification for the counterpart device was successfully determined (1204). For instance, ML model 254 may generate confidence values that indicate levels of confidence that the RF environment belongs to different RF environment classifications. Control unit 250 may determine that an RF environment classification was successfully determined if the confidence score of an RF environment classification with the highest confidence score is greater than a predetermined threshold. In another example, control unit 250 may determine that an RF environment classification was not successfully determined if there is no predetermined RF environment classification for a current location of hearing instruments 102. If an RF environment classification for the counterpart device was not successfully determined ("NO" branch of 1204), control unit 250 may attempt to determine an RF environment classification for the counterpart device again, after a time delay (1206). During the time delay, control unit 250 may obtain new environment data.

Once control unit 250 has determined the RF environment classification for the counterpart device, control unit 250 may determine a system configuration of communication system 204 for communicating with the counterpart device. For instance, in the example of FIG. 12, control unit 250 uses lookup table 256 to determine a system configuration for use when communicating with the counterpart device given the RF environment classification. As discussed above, lookup table 256 includes entries that map RF environment classifications and types of counterpart devices to system configurations. If control unit 250 successfully determined RF environment classifications for the counterpart device ("YES" branch of 1204), control unit 250 may determine whether lookup table 256 has an entry that maps the RF environment classification determined for the counterpart device and the type of the counterpart device to a system configuration (1208). If lookup table 256 does not include an entry that maps the RF environment classification for the counterpart device and the type of the counterpart device to a system configuration ("NO" branch of 1208), control unit 250 may determine a system configuration for the counterpart device (1210). For example, control unit 250 may perform a process that tests various available system configurations and measures values of QoS parameters while communicating with the counterpart device. Control unit 250 may select a system configuration for communicating with the counterpart device in the current RF environment based on the measured values of the QoS parameters while communicating with the counterpart device. For instance, control unit 250 may select the system configuration that provides the best combination of measured values of the QoS parameters.

Additionally, control unit 250 may update lookup table 256 to include an entry that maps the RF environment classification for the counterpart device to the determined system configuration for the counterpart device (1212). Subsequently, control unit 250 may configure antenna 238 and impedance matching circuitry 239 to operate using the determined system configuration for the counterpart device when communicating with the counterpart device (1214).

On the other hand, if lookup table 256 includes an entry that maps the RF environment classification for the counterpart device and type of the counterpart device to a system configuration ("YES" branch of 1208), control unit 250 may load the system configuration for the counterpart device from lookup table 256 (1216). Control unit 250 may then configure antenna 238 and impedance matching circuitry 239 to operate using the determined system configuration for the counterpart device when communicating with the counterpart device (1216).

In this way, control unit 250 may determine whether lookup table 256 includes an entry that specifies a predetermined system configuration for the RF environment classification. Based on lookup table 256 not including the entry, control unit 250 may determine a system configuration for the RF environment classification. Control unit 250 may update lookup table 256 to include an entry that specifies the determined system configuration for the RF environment classification. Control unit 250 may select the determined system configuration for the RF environment classification as the system configuration of communication system 204. Based on lookup table 256 including the entry, control unit 250 may select the predetermined system configuration specified by the entry as the system configuration of communication system 204. Control unit 250 may obtain the environment data, generate the RF environment classification, select the system configuration, and cause the communication system to use the selected system configuration while the hearing instrument is being worn by user 104.

Furthermore, control unit 250 may monitor environment data characterizing the environmental conditions of the RF communication channel of the counterpart device (i.e., the RF communication channel between hearing instrument 200 and the counterpart device) and determine if a quality of the RF communication channel of the counterpart device is satisfactory (1220). For example, control unit 250 may calculate a score based on one or more values of QoS parameters of the RF communication channel. In this example, control unit 250 may determine that the quality of the RF communication channel is satisfactory based on a comparison of the score and a threshold level. Thus, control unit 250 may determine whether a quality of the RF communication channel achieves the threshold level. In some examples, control unit 250 may determine that that the quality of the RF communication channel is not satisfactory if the values of an of the QoS parameters does not satisfy a corresponding threshold level. If the link quality is satisfactory for the counterpart device ("YES" branch of 1220), control unit 250 may continue to monitor the environment data.

If the quality of the RF communication channel of the counterpart device is not satisfactory ("NO" branch of 1220), control unit 250 may determine whether the RF communication channel of the counterpart device is outside a current RF environment classification for the counterpart device (1222). For example, control unit 250 may perform the process described above for determining the RF environment classification again to determine whether the RF communication channel of the counterpart device is outside the current classification for the counterpart device. Control unit 250 may determine that the RF communication channel of the counterpart device is outside the current RF environment classification for the counterpart device if the determined RF environment classification is not the same as the current classification for the counterpart device. In some examples, control unit 250 may determine that the RF communication channel of the counterpart device is outside the current RF environment classification for the counterpart device if hearing instruments 102 have moved to a location associated with a different RF environment classification. If the RF communication channel of the counterpart device is outside the current RF environment classification for the counterpart device ("YES" branch of 1222), control unit 250 may again load the default system configuration for the counterpart device (1200) and the operation of FIG. 12 may begin again.

If the RF communication channel of the counterpart device is not outside the current RF environment classification for the counterpart device ("NO" branch of 1222), control unit 250 may perform limited tuning of the system configuration for the counterpart device (1224). In some examples, control unit 250 may use a sequential algorithm to systematically and incrementally perform the limited tuning of the system configuration for the counterpart device. For example, control unit 250 may cause switch on or off various circuit branches in an impedance matching network of impedance matching circuitry 239 and/or switch on or off various elements of the antenna to incrementally change impedance matching of antenna 238 and impedance matching circuitry 239.

In this way, control unit 250 may determine whether a quality of the RF communication channel of the counterpart device achieves a threshold level. Based on the quality of the RF communication channel of the counterpart device not achieving the threshold level, control unit 250 may determine whether values of one or more QoS parameters of the RF communication channel are outside one or more predefined parameter ranges for the current RF environment classification. Based on the one or more parameters of the RF communication channel being outside one or more predefined parameter ranges for the current RF environment classification, control unit 250 may tune the system configuration. For instance, control unit 250 may enable or disable one or more elements of antenna 238 and/or impedance matching circuitry 239 so that the impedance matching is changed in a relatively small way.

Control unit 250 may then determine whether the limited tuning of the system configuration for the counterpart device improved link metrics (1226). For example, control unit 250 may obtain measured values of one or more QoS parameters (i.e., link metrics) of the RF communication channel of the counterpart device. Control unit 250 may use the measured values to determine whether the tuning of the system configuration improved the measured values of the one or more QoS parameters.

If the limited tuning of the system configuration for the counterpart device improved the link metrics of the RF communication channel of the counterpart device ("YES" branch of 1226), control unit 250 may update the entry in lookup table 256 for the RF environment classification to indicate the tuned system configuration (1228). Control unit 250 may configure antenna 238 and impedance matching circuitry 239 to operate using the tuned system configuration for the counterpart device when communicating with the counterpart device (1230). If the limited tuning of the system configuration for the counterpart device did not improve the link metrics ("NO" branch of 1226), control unit 250 may continue to monitor the environment data and determine if the quality of the RF communication channel of the counterpart device is satisfactory (1220). Control unit 250 may continue to monitor the environment data and determine the quality of the RF communication channel of the counterpart device is satisfactory 1020.

In some examples, control unit 250 automatically tunes the system configuration once an RF environment classification has been determined recognized by gathering wireless link RSSI over time for multiple channels, or once the environment is recognized by gathering packet-error-rate (PER) or bit-error-rate (BER) over time for multiple channels. Tuning the system configuration may involve making incremental changes to the system configuration, such as enabling or disabling elements of antenna 238 and/or impedance matching circuitry 239 individually. Control unit 250 tunes the system configuration to optimize/improve link robustness, and thereby minimize PER/BER. Control unit 250 may store data describing these system configurations and may associate the system configurations as optimal settings for a given (recognized) RF environment and also for each specific device/link the hearing instrument is in communication within that environment.

In some examples, control unit 250 automatically tunes the system configuration during training intervals that are interleaved with (or additional) to time intervals in which hearing instrument 200 performs normal communication operations. For instance, during training intervals, control unit 250 may test different system configurations to determining whether a communication link with the counterpart device breaks (i.e., hearing instrument 200 becomes unable to communicate with the counterpart device) while using the system configurations. If the communication link with the counterpart device breaks while testing a specific system configuration, control unit 250 does not use the specific system configuration. In some instances, misclassification of the RF environment may make the communication link more likely to break. In some examples, control unit 250 automatically tunes the system configuration during normal communication operations. For instance, control unit 250 may automatically tune the system configuration in parallel with normal communication operations.

In some examples, the training/optimization settings vs. RF environment could be under the direction of an AI (e.g., ML model 254) which may learn and improve the system configurations on an on-going basis for improving link quality of service (QoS) parameters for each RF environment. This on-going optimization process need not be disruptive but may be done by small delta adjustments from the current settings for that RF environment. If an improvement in link QoS is achieved for that classified RF environment, control unit 250 may update the system configuration for the RF environment.

The following is a non-limiting list of clauses in accordance with one or more techniques of this disclosure.

Clause 1A. A hearing instrument comprising: a communication system that includes one or more components, wherein the one or more components include an antenna, impedance matching circuitry, and a transceiver electrically connected to the antenna via the impedance matching circuitry; and one or more processors implemented circuitry and communicatively coupled to the transceiver, the one or more processors configured to: obtain communication performance data for a plurality of device-configuration combinations, wherein: each of the device-configuration combinations includes a combination of a counterpart device and a system configuration of a plurality of system configurations, the system configurations are associated with different levels of impedance matching between the antenna and the impedance matching circuitry, for each respective device-configuration combination of the device-configuration combinations, the communication performance data for the respective device-configuration combination is indicative of values of one or more Quality of Service (QoS) parameters of Radio Frequency (RF) communication between the hearing instrument and the counterpart device of the respective device-configuration combination while the communication system uses the system configuration of the device-configuration combination to communicate with the counterpart device of the respective device-configuration combination; select, based on the communication performance data for the plurality of system configurations, a system configuration from among the plurality of system configurations for wireless communication with the counterpart device; and configure the communication system to use the selected system configuration for wireless communication with the counterpart device.

Clause 2A. The hearing instrument of clause 1A, wherein the counterpart device is a contralateral hearing instrument and the communication performance data for the device-configuration combination includes ear-to-ear (E2E) performance data for the device-configuration combination.

Clause 3A. The hearing instrument of any of clauses 1A-2A, wherein: the antenna includes one or more antenna elements, the impedance matching circuitry includes one or more circuit pathways, and the system configurations correspond to different combinations of the one or more antenna elements of the antenna and the one or more circuit pathways of the impedance matching circuitry.

Clause 4A. The hearing instrument of any of clauses 1A-3A, wherein: the components of the communication system include a RF front end (RFFE), and the plurality of system configurations includes one or more system configurations in which the RFFE is enabled and one or more system configurations in which the RFFE is disabled.

Clause 5A. The hearing instrument of any of clauses 1A-4A, wherein the counterpart device is a contralateral hearing instrument, and the contralateral hearing instrument is configured to use the selected system configuration while wirelessly communicating with the hearing instrument.

Clause 6A. The hearing instrument of any of clauses 1A-5A, wherein the one or more components include a plurality of components, the one or more processors are configured to, as part of selecting the system configuration, based on a comparison of the values of one or more of the QoS parameters and one or more thresholds, perform an iteration of a tuning process that comprises: modifying a configuration of a current component of the plurality of components according to a step direction for the current component, the current component being one of the plurality of components of the communication system; determining whether the values of the one or more of the QoS parameters improve over a first predetermined time interval while using the modified configuration for transmitting and receiving second RF signals to and from the counterpart device; reversing the step direction for the current component depending on whether the values of one or more of the QoS parameters improve over the first predetermined time interval; determining whether a second predetermined time interval has expired since a most recent modification to the configuration of the current component; based on the second predetermined time interval not having expired since the most recent modification to the configuration of the current component, performing a next iteration of the tuning process; and based on the second predetermined time interval having expired since the most recent modification to the configuration of the current component, changing which of the plurality of components is the current component for the next iteration of the tuning process.

Clause 7A. The hearing instrument of any of clauses 1A-6A, wherein the QoS parameters include a packet error rate.

Clause 8A. The hearing instrument of any of clauses 1A-7A, wherein the QoS parameters include a Received Signal Strength Indicator (RSSI).

Clause 9A. The hearing instrument of any of clauses 1A-8A, wherein the one or more processors are configured to, as part of selecting the system configuration: apply a machine learning (ML) model to the communication performance data for the device-configuration combinations to generate an output; and select the system configuration based on the output of the ML model.

Clause 10A. The hearing instrument of any of clauses 1A-9A, wherein the counterpart device is one of a plurality of counterpart devices, and the one or more processors are configured to, for each respective counterpart device of the plurality of counterpart devices: for each respective system configuration of the plurality of system configurations: obtain communication performance data for a second plurality of device-configuration combinations, wherein each second device-configuration combination of the plurality of second device-configuration combinations is a combination of the respective counterpart device and the respective system configuration, the communication performance data for the second device-configuration combination being indicative of values of one or more QoS parameters of RF communication between the hearing instrument and the respective counterpart device while using the respective system configuration; select, based on the communication performance data for the plurality of second device-configuration combinations, a system configuration from among a plurality of second system configurations for wireless communication with the respective counterpart device; and configure the communication system to use the system configuration selected from the plurality of system configurations for wireless communication with the respective counterpart device.

Clause 11A. A method comprising: obtaining, by one or more processors of a hearing instrument that are communicatively coupled to a transceiver of a communication system of the hearing instrument, communication performance data for a plurality of device-configuration combinations, wherein: each of the device-configuration combinations includes a combination of a counterpart device and a system configuration of a plurality of system configurations, the system configurations are associated with different levels of impedance matching between an antenna of the communication system and impedance matching circuitry of the communication system, for each respective device-configuration combination of the device-configuration combinations, the communication performance data for the respective device-configuration combination is indicative of values of one or more Quality of Service (QoS) parameters of Radio Frequency (RF) communication between the hearing instrument and the counterpart device of the respective device-configuration combination while the communication system uses the system configuration of the device-configuration combination to communicate with the counterpart device of the respective device-configuration combination; selecting, by the one or more processors, based on the communication performance data for the plurality of system configurations, a system configuration from among the plurality of system configurations for wireless communication with the counterpart device; and configuring, by the one or more processors, the communication system to use the selected system configuration for wireless communication with the counterpart device.

Clause 12A. The method of clause 11A, wherein the counterpart device is a contralateral hearing instrument and the communication performance data for the device-configuration combination includes ear-to-ear (E2E) performance data for the device-configuration combination.

Clause 13A. The method of any of clauses 11A-12A, wherein: the antenna includes one or more antenna elements, the impedance matching circuitry includes one or more circuit pathways, and the system configurations correspond to different combinations of the one or more antenna elements of the antenna and the one or more circuit pathways of the impedance matching circuitry.

Clause 14A. The method of any of clauses 11A-13A, wherein: the communication system includes a RF front end (RFFE), and the plurality of system configurations includes one or more system configurations in which the RFFE is enabled and one or more system configurations in which the RFFE is disabled.

Clause 15A. The method of any of clauses 11A-14A, wherein the counterpart device is a contralateral hearing instrument, and the contralateral hearing instrument is configured to use the selected system configuration while wirelessly communicating with the hearing instrument.

Clause 16A. The method of any of clauses 11A-15A, wherein the communication system includes a plurality of components, and selecting the system configuration comprises, based on a comparison of the values of one or more of the QoS parameters and one or more thresholds, performing an iteration of a tuning process that comprises: modifying a configuration of a current component of the plurality of components according to a step direction for the current component, the current component being one of the plurality of components of the communication system; determining whether the values of the one or more of the QoS parameters improve over a first predetermined time interval while using the modified configuration for transmitting and receiving second RF signals to and from the counterpart device; reversing the step direction for the current component depending on whether an average packet error rate improves over the first predetermined time interval; determining whether a second predetermined time interval has expired since a most recent modification to the configuration of the current component; based on the second predetermined time interval not having expired since the most recent modification to the configuration of the current component, performing a next iteration of the tuning process; and based on the second predetermined time interval having expired since the most recent modification to the configuration of the current component, changing which of the plurality of components is the current component for the next iteration of the tuning process.

Clause 17A. The method of any of clauses 11A-16A, wherein the QoS parameters include one or more of a packet error rate or a Received Signal Strength Indicator (RSSI).

Clause 18A. The method of any of clauses 11A-17A, wherein selecting the system configuration comprises: applying, by the one or more processors, a machine learning (ML) model to the communication performance data for the device-configuration combinations to generate an output; and selecting, by the one or more processors, the system configuration based on the output of the ML model.

Clause 19A. The method of any of clauses 11A-18A, wherein the counterpart device is one of a plurality of counterpart devices, and the method further comprises, for each respective counterpart device of the plurality of counterpart devices: for each respective system configuration of the plurality of system configurations: obtaining, by the one or more processors, communication performance data for a plurality of second device-configuration combinations, wherein each second device-configuration combination of the plurality of second device-configuration combinations is a combination of the respective counterpart device and the respective system configuration, the communication performance data for the second device-configuration combination being indicative of values of one or more QoS parameters of RF communication between the hearing instrument and the respective counterpart device while using the respective system configuration; selecting, by the one or more processors, based on the communication performance data for the plurality of second device-configuration combinations, a system configuration from among the plurality of system configurations for wireless communication with the respective counterpart device; and configuring, by the one or more processors, the communication system to use the selected system configuration selected from the plurality of system configurations for wireless communication with the respective counterpart device.

Clause 1B. A hearing instrument comprising: a communication system that includes an antenna, an impedance matching circuitry, and a transceiver electrically connected to the antenna via the impedance matching circuitry; and one or more processors implemented circuitry and communicatively coupled to the transceiver, the one or more processors configured to: obtain environment data characterizing environmental conditions of a Radio Frequency (RF) communication channel between the hearing instrument and a counterpart device; apply one or more machine learning (ML) classification models to the environment data to generate an RF environment classification for the RF communication channel; select, based on the RF environment classification, a system configuration from among a plurality of system configurations that the communication system is configured to use, wherein the system configurations are associated with different levels of impedance matching between the antenna and the impedance matching circuitry; and cause the communication system to use the selected system configuration while transmitting and receiving Radio Frequency (RF) signals to and from a counterpart device.

Clause 2B. The hearing instrument of clause 1B, wherein the one or more processors are further configured to: determine whether a lookup table includes an entry that specifies a predetermined system configuration for the RF environment classification; based on the lookup table not including the entry: determine a system configuration for the RF environment classification; update the lookup table to include an entry that specifies the determined system configuration for the RF environment classification; and select the determined system configuration for the RF environment classification; and based on the lookup table including the entry, select the predetermined system configuration specified by the entry.

Clause 3B. The hearing instrument of any of clauses 1B-2B, wherein the one or more processors are further configured to: determine whether a quality of the RF communication channel of the counterpart device achieves a threshold level; and based on the quality of the RF communication channel of the counterpart device not achieving the threshold level: determine whether one or more parameters of the RF communication channel are outside one or more predefined parameter ranges for the RF environment classification; and based on the one or more parameters of the RF communication channel being outside one or more predefined parameter ranges for the RF environment classification, tune the system configuration.

Clause 4B. The hearing instrument of any of clauses 1B-3B, wherein the one or more processors are configured to obtain the environment data, generate the RF environment classification, select the system configuration, and cause the communication system to use the selected system configuration while the hearing instrument is being worn by a user and communicating with the counterpart device or other body-worn device.

Clause 5B. The hearing instrument of any of clauses 1B-4B, wherein: the one or more processors are configured to receive a Received Signal Strength Indicator (RSSI) from the counterpart device; and the one or more processors are configured to select the system configuration based on the RSSI.

Clause 6B. The hearing instrument of clause 5B, wherein the RSSI is a first RSSI and the one or more processors are configured to: receive a signal from the counterpart device; determine a second RSSI based on the received signal; and transmit the second RSSI to the counterpart device.

Clause 7B. The hearing instrument of any of clauses 1B-6B, wherein the one or more processors are configured to select the system configuration so that the system configuration changes depending on whether the counterpart device is an on-body or an off-body electronic wireless instrument in communication with the hearing instrument.

Clause 8B. The hearing instrument of any of clauses 1B-7B, wherein the one or more processors are configured to select different impedance and antenna configurations for communicating with different devices.

Clause 9B. A method comprising: obtaining, by one or more processors of a hearing instrument, environment data characterizing environmental conditions of a Radio Frequency (RF) communication channel between the hearing instrument and a counterpart device; applying, by the one or more processors, one or more machine learning (ML) classification models to the environment data to generate an RF environment classification for the RF communication channel; selecting, by the one or more processors, based on the RF environment classification, a system configuration from among a plurality of system configurations that a communication system of the hearing instrument is configured to use, wherein the system configurations are associated with different levels of impedance matching between an antenna of the communication system of the hearing instrument and impedance matching circuitry of the communication system; and causing, by the one or more processors, the communication system to use the selected system configuration while transmitting and receiving Radio Frequency (RF) signals to and from a counterpart device.

10B. The method of clause 9B, further comprising: determining, by the one or more processors, whether a lookup table includes an entry that specifies a predetermined system configuration for the RF environment classification; and based on the lookup table not including the entry: determining, by the one or more processors, a system configuration for the RF environment classification; updating, by the one or more processors, the lookup table to include an entry that specifies the determined system configuration for the RF environment classification; and selecting, by the one or more processors, the determined system configuration for the RF environment classification.

Clause 11B. The method of any of clauses 9B-10B, further comprising: determining, by the one or more processors, whether a quality of the RF communication channel achieves a threshold level; and based on the quality of the RF communication channel not achieving the threshold level: determining, by the one or more processors, whether one or more parameters of the RF communication channel are outside one or more predefined parameter ranges for the RF environment classification; and based on the one or more parameters of the RF communication channel being outside one or more predefined parameter ranges for the RF environment classification, tuning, by the one or more processors, the system configuration.

Clause 12B. The method of any of clauses 9B-11B, wherein the one or more processors obtain the environment data, generate the RF environment classification, select the system configuration, and cause the communication system to use the selected system configuration while the hearing instrument is being worn by a user and communicating with a contralateral hearing instrument or other body-worn device.

Clause 13B. The method of any of clauses 9B-12B, wherein: the method further comprises receiving a Received Signal Strength Indicator (RSSI) from the counterpart device; and selecting the system configuration comprises selecting, by the one or more processors, the system configuration based on the RSSI.

Clause 14B. The method of clause 13B, wherein the RSSI is a first RSSI and the method further comprises: receiving, by the one or more processors, a signal from the counterpart device; determining, by the one or more processors, a second RSSI based on the received signal; and transmitting, by the one or more processors, the second RSSI to the counterpart device.

Clause 15B. The method of any of clauses 9B-14B, wherein selecting the system configuration comprises, selecting, by the one or more processors, the system configuration so that the system configuration changes depending on whether the counterpart device is a contralateral hearing instrument or a non-ear-wearable device.

Clause 16B. The method of any of clauses 9B-15B, wherein selecting the system configuration comprises selecting, by the one or more processors, different system configurations for communicating with different devices.

In this disclosure, ordinal terms such as "first," "second," "third," and so on, are not necessarily indicators of positions within an order, but rather may be used to distinguish different instances of the same thing. Examples provided in this disclosure may be used together, separately, or in various combinations. Furthermore, with respect to examples that involve personal data regarding a user, it may be required that such personal data only be used with the permission of the user.

It is to be recognized that depending on the example, certain acts or events of any of the features or techniques described herein can be created, assembled, or performed in a different sequence, may be added, merged, or left out altogether (e.g., not all described acts or events are necessary for the practice of the techniques). For instance, this disclosure describes various examples of an antenna, these examples may be used individually or in combination. Moreover, in certain examples, acts or events may be performed concurrently, e.g., through multi-threaded processing, interrupt processing, or multiple processors, rather than sequentially.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processing circuits to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, cache memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Functionality described in this disclosure may be performed by fixed function and/or programmable processing circuitry. For instance, instructions may be executed by fixed function and/or programmable processing circuitry. Such processing circuitry may include one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules. Also, the techniques could be fully implemented in one or more circuits or logic elements. Processing circuits may be coupled to other components in various ways. For example, a processing circuit may be coupled to other components via an internal device interconnect, a wired or wireless network connection, or another communication medium.

Where a phrase similar to "at least one of A, B, and C" is used in the claims, it is intended that the phrase be interpreted to mean that A alone may be present in an embodiment; B alone may be present in an embodiment; C alone may be present in an embodiment; or that any combination of the elements A, B, and C may be present in a single embodiment, for example, A and B, A and C, B and C, or A and B and C. Where a phrase similar to "one or more processors configured to X, Y, and Z" is used in the claims, it is intended that the phrase be interpreted to mean at least: that a processor A alone may perform functions X, Y, and Z; that two or more processors (e.g., processors A and B) may collectively perform functions X, Y, and Z; that a first processor A may perform functions X and Y and a second processor may perform function Z; or that a first processor A may perform function X, a second processor may perform function Y, and a third processor may perform function Z.

The techniques of this disclosure may be implemented in a wide variety of devices or apparatuses, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

## Claims

1. A method comprising:
obtaining, by one or more processors of a hearing instrument that are communicatively coupled to a transceiver of a communication system of the hearing instrument, communication performance data for a plurality of device-configuration combinations, wherein:
each of the device-configuration combinations includes a combination of a counterpart device and a system configuration of a plurality of system configurations,
the system configurations are associated with different levels of impedance matching between an antenna of the communication system and impedance matching circuitry of the communication system,
for each respective device-configuration combination of the device-configuration combinations, the communication performance data for the respective device-configuration combination is indicative of values of one or more Quality of Service (QoS) parameters of Radio Frequency (RF) communication between the hearing instrument and the counterpart device of the respective device-configuration combination while the communication system uses the system configuration of the device-configuration combination to communicate with the counterpart device of the respective device-configuration combination;
selecting, by the one or more processors, based on the communication performance data for the plurality of system configurations, a system configuration from among the plurality of system configurations for wireless communication with the counterpart device; and
configuring, by the one or more processors, the communication system to use the selected system configuration for wireless communication with the counterpart device.

2. The method of claim 1, wherein the counterpart device is a contralateral hearing instrument and the communication performance data for the respective device-configuration combination includes ear-to-ear (E2E) performance data for the device-configuration combination.

3. The method of any of claims 1-2, wherein:
the antenna includes one or more antenna elements,
the impedance matching circuitry includes one or more circuit pathways, and
the system configurations correspond to different combinations of the one or more antenna elements of the antenna and the one or more circuit pathways of the impedance matching circuitry.

4. The method of any of claims 1-3, wherein:
the communication system includes a RF front end (RFFE), and
the plurality of system configurations includes one or more system configurations in which the RFFE is enabled and one or more system configurations in which the RFFE is disabled.

5. The method of any of claims 1-4, wherein the counterpart device is a contralateral hearing instrument, and the contralateral hearing instrument is configured to use the selected system configuration while wirelessly communicating with the hearing instrument.

6. The method of any of claims 1-5, wherein the communication system includes a plurality of components, and selecting the system configuration comprises, based on a comparison of the values of the one or more of the QoS parameters and one or more thresholds, performing an iteration of a tuning process that comprises:
modifying a configuration of a current component of the plurality of components according to a step direction for the current component, the current component being one of the plurality of components of the communication system;
determining whether the values of the one or more of the QoS parameters improve over a first predetermined time interval while using the modified configuration for transmitting and receiving second RF signals to and from the counterpart device;
reversing the step direction for the current component depending on whether an average packet error rate improves over the first predetermined time interval;
determining whether a second predetermined time interval has expired since a most recent modification to the configuration of the current component;
based on the second predetermined time interval not having expired since the most recent modification to the configuration of the current component, performing a next iteration of the tuning process; and
based on the second predetermined time interval having expired since the most recent modification to the configuration of the current component, changing which of the plurality of components is the current component for the next iteration of the tuning process.

7. The method of any of claims 1-6, wherein the QoS parameters include one or more of a packet error rate or a Received Signal Strength Indicator (RSSI).

8. The method of any of claims 1-7, wherein selecting the system configuration comprises:
applying, by the one or more processors, a machine learning (ML) model to the communication performance data for the device-configuration combinations to generate an output; and
selecting, by the one or more processors, the system configuration based on the output of the ML model.

9. The method of any of claims 1-8, wherein the counterpart device is one of a plurality of counterpart devices, and the method further comprises, for each respective counterpart device of the plurality of counterpart devices:
for each respective system configuration of the plurality of system configurations:
obtaining, by the one or more processors, communication performance data for a plurality of second device-configuration combinations, wherein each second device-configuration combination of the plurality of second device-configuration combinations is a combination of the respective counterpart device and the respective system configuration, the communication performance data for the second device-configuration combination being indicative of values of one or more QoS parameters of RF communication between the hearing instrument and the respective counterpart device while using the respective system configuration;
selecting, by the one or more processors, based on the communication performance data for the plurality of second device-configuration combinations, a system configuration from among the plurality of system configurations for wireless communication with the respective counterpart device; and
configuring, by the one or more processors, the communication system to use the selected system configuration selected from the plurality of system configurations for wireless communication with the respective counterpart device.

10. A hearing instrument comprising:
a communication system that includes one or more components, wherein the one or
more components include an antenna, impedance matching circuitry, and a transceiver electrically connected to the antenna via the impedance matching circuitry; and
one or more processors implemented circuitry and communicatively coupled to the transceiver, the one or more processors configured to perform operations of any of claims 1-9.
